(19) Europäisches Patentamt
European Patent Office
Office européen des brevets

(11) **EP 2 590 775 B1**

(12) **FASCICULE DE BREVET EUROPEEN**

(45) Date de publication et mention de la délivrance du brevet:
**28.08.2019 Bulletin 2019/35**

(21) Numéro de dépôt: **11738020.4**

(22) Date de dépôt: **24.06.2011**

(51) Int Cl.:
**B23K 9/095** (2006.01)      **B23K 31/12** (2006.01)

(86) Numéro de dépôt international:
**PCT/FR2011/051469**

(87) Numéro de publication internationale:
**WO 2012/004491 (12.01.2012 Gazette 2012/02)**

(54) **PROCEDE DE CONTROLE DE LA QUALITE D'UNE SOUDURE**

VERFAHREN ZUR SCHWEISSQUALITÄTSÜBERWACHUNG

METHOD OF CONTROLLING A WELD QUALITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2010 FR 1055589**

(43) Date de publication de la demande:
**15.05.2013 Bulletin 2013/20**

(73) Titulaire: **Renault S.A.S.**
**92100 Boulogne-Billancourt (FR)**

(72) Inventeurs:
• **SAINT-MARTIN, Jean-Christophe**
**F-78000 Versailles (FR)**
• **CEMBRZYNSKI, Thierry**
**F-78210 Saint Cyr L'Ecole (FR)**

(56) Documents cités:
**WO-A1-01/43910          JP-A- 3 209 582**
**US-A1- 2003 234 239**

• **YANG H ET AL: "An experimental investigation on critical specimen sizes of high strength steels DP600 in resistance spot welding", MATERIALS AND DESIGN, LONDON, GB, vol. 29, no. 9, 1 octobre 2008 (2008-10-01), pages 1679-1684, XP022715688, ISSN: 0261-3069, DOI: DOI:10.1016/J.MATDES.2008.04.009 [extrait le 2008-04-08]**
• **ZHOU, M. ; HU, S.J. ; ZHANG, H.: "Critical Specimen sizes for Tensile-Shear Testing of Steel Sheets", WELDING JOURNAL, vol. 78, no. 9, septembre 1999 (1999-09), pages 305-313, XP002626860, ISSN: 0043-2296**

**Description**

L'invention concerne un procédé de contrôle de la qualité d'une soudure et un dispositif permettant la mise en oeuvre dudit procédé. L'invention concerne aussi un dispositif mettant en oeuvre un tel procédé de contrôle de la qualité d'une soudure. L'invention porte encore sur un programme informatique apte à la mise en oeuvre du procédé.

Lorsqu'elle est correctement réalisée, une soudure, ou un cordon de soudure, est un moyen qui est largement utilisé dans l'industrie pour réaliser un assemblage résistant et fiable de deux pièces entre elles, notamment deux pièces métalliques ou thermoplastiques. Un contrôle strict et rigoureux de la qualité de la soudure est essentiel pour assurer un niveau élevé de performance et de fiabilité de l'assemblage réalisé au moyen de la soudure.

Deux catégories de contrôle s'opposent : les contrôles destructifs dans lesquels l'assemblage soudé est après contrôle inutilisable et les contrôles non-destructifs dans lesquels l'assemblage soudé est après contrôle toujours utilisable.

Parmi les contrôles non-destructifs, de façon connue, le cordon de soudure est contrôlé par inspection visuelle par un opérateur, ou par inspection optique de façon automatique par un contrôle dit de profilométrie. La profilométrie est une méthode de mesure, qui consiste à déterminer le profil d'une surface, dans ce cas la surface de la soudure. Le contrôle de profilométrie est efficace, mais il ne fournit des informations que sur l'aspect extérieur du cordon de soudure. L'aspect extérieur ne suffit pas pour valider la conformité d'un cordon laser. De plus, dans le cas du soudage de pièces thermoplastiques, il n'y a pas de modification de l'aspect extérieur.

L'analyse de la température de la soudure (pyrométrie), plus précisément l'analyse de la température des matériaux lors de la soudure, permet aussi un contrôle de la qualité de la soudure. Le signal représentatif de la température, appelé par la suite signal de température, est analysé dans le but de détecter un éventuel défaut dans la soudure, voire d'identifier le type de défaut généré en cause. On connaît différents moyens permettant de mesurer la température de la soudure. Un premier moyen connu comporte une caméra thermique infrarouge, qui fournit une image représentative de la température de la zone observée, l'image étant analysée et traitée dans le but de déceler un éventuel défaut dans la soudure. Un second moyen connu permettant de collecter la température du métal en fusion du cordon de soudure est le pyromètre optique. Le pyromètre optique est un dispositif qui est apte à capter le rayonnement thermique émis par un élément au moyen d'un capteur et à fournir un signal représentatif de la température dudit élément.

Pour la mise en oeuvre des deux types de contrôles non-destructifs mentionnés précédemment, la détermination de la conformité des soudures se fait en plaçant des seuils d'alertes sur différentes caractéristiques de la soudure. La définition de seuils d'alertes ne permet pas de classer de manière robuste les soudures dans les classes « conforme », « incertain » et « non conforme ».

On connaît par exemple des documents EP1 275 464 et EP1 361 015 des procédés de contrôle de la qualité d'une soudure dans lesquels on acquiert des données thermiques puis on les traite afin de déterminer si la soudure est conforme ou non conforme.

On connaît aussi du document EP 1 767 308 un procédé de contrôle de la qualité d'une soudure dans lequel on détecte un rayonnement produit dans la zone de soudure et on utilise une moyenne et un écart type pour qualifier la qualité de la soudure. On regarde alors pour chaque nouvelle soudure, en fonction de sa moyenne et de son écart type, comment elle doit être qualifiée. Il est à noter que, dans ce procédé, un paramètre doit être renseigné par un expert du soudage. Par ailleurs, dans ce procédé, il n'y a pas d'apprentissage, il nécessite donc de bonnes connaissances de la part des opérateurs qui le mettent en oeuvre. Chaque soudure n'est plus caractérisée que par un ensemble de moyennes et d'écarts types. Ce procédé est appliqué uniquement à la soudure de matériaux métalliques.

On connaît encore du document EP1 555 082 un procédé de contrôle de la qualité d'une soudure dans lequel on détecte un rayonnement produit dans la zone de soudure. La qualification de la qualité des soudures se fait par analyse de la transformée de fourrier du signal, qui permet de déterminer les éventuelles fréquences parasites qui traduisent la présence de trous. Ce procédé est applicable uniquement à la soudure de matériaux métalliques. Il est par ailleurs, industriellement difficile à mettre en oeuvre.

Le document D6 décrit un procédé de contrôle de la qualité d'une soudure, mettant en oeuvre un modèle statistique probabiliste, de détermination d'une qualification de la qualité de la soudure utilisant des données de paramètres de soudage.

Le but de l'invention est de fournir un procédé de contrôle de la qualité d'une soudure permettant de remédier aux problèmes évoqués précédemment et améliorant les procédés de contrôle de la qualité d'une soudure connus de l'art antérieur. En particulier, l'invention propose un procédé de contrôle de qualité selon la revendication 1 permettant d'améliorer la robustesse de la qualification de la qualité d'une soudure, et qui peut être mis en oeuvre sur différents types de matériaux (pas uniquement les matériaux métalliques). L'invention porte encore sur un dispositif de contrôle de qualité selon la revendication 8 permettant de mettre en oeuvre un tel procédé. Plus particulièrement, l'invention porte sur un moyen de contrôle en temps réel, permettant d'évaluer la qualité à l'intérieur de la soudure. L'invention porte encore sur un programme d'ordinateur selon la revendication 10 permettant la mise en oeuvre de ce procédé, et sur un support d'enregistrement de données selon la revendication 7.

Selon l'invention, le procédé de contrôle de la qualité d'une soudure met en oeuvre un modèle statistique probabiliste, de détermination d'une qualification de la qualité de la soudure.

Le modèle statistique est un modèle du type à régression logistique.

Le dessin annexé représente, à titre d'exemple, un mode d'exécution d'un procédé de contrôle de qualité selon l'invention et un mode de réalisation d'un dispositif de contrôle de qualité selon l'invention.

La figure 1 est un schéma présentant un exemple particulier des conditions statistiques permettant de placer des essais de soudure comme conforme, non conforme ou incertain.

La figure 2 est un ensemble de graphiques représentant des données caractéristiques d'une soudure et des paliers obtenus pour ces données caractéristiques en mettant en oeuvre une étape d'un mode de réalisation du procédé de contrôle de qualité selon l'invention.

La figure 3 est un graphique représentant des données et des paliers obtenus pour ces données en mettant en oeuvre une étape d'un mode de réalisation du procédé de contrôle de qualité selon l'invention.

La figure 4 est un autre graphique représentant des données profilométriques et des paliers obtenus pour ces données en mettant en oeuvre une étape d'un mode de réalisation du procédé de contrôle de qualité selon l'invention.

La figure 5 est encore un autre graphique représentant des données et des paliers obtenus pour ces données en mettant en oeuvre une étape d'un mode de réalisation du procédé de contrôle de qualité selon l'invention.

La figure 6 est un graphique illustrant une technique de compression de données lissées, la compression étant réalisée par interpolation linéaire.

La figure 7 est un graphique illustrant la technique de compression de données lissées de la figure 6 appliquée aux données lissées de la figure 4.

La figure 8 est un ordinogramme de décision expliquant la logique de discrimination de la qualité de la soudure.

La figure 9 est un exemple d'une série de 10 observations et des réponses associées à ces 10 observations via le modèle logistique.

Les figures 10 et 11 sont des graphiques illustrant une technique d'apprentissage de la qualité des cordons, validée par une méthode d'interpolation parabolique des effets de différents facteurs sur une opération de soudage.

La figure 12 est un ordinogramme d'un exemple d'exécution de la première phase du procédé de contrôle de qualité selon l'invention.

La figure 13 est un ordinogramme d'un exemple d'exécution de la deuxième phase du procédé de contrôle de qualité selon l'invention.

La figure 14 est un schéma d'un mode de réalisation d'un dispositif de contrôle de qualité selon l'invention.

Selon l'invention, le procédé de contrôle de qualité d'une soudure comprend deux phases :

- une première phase de définition d'une logique ou d'un modèle de qualification de la qualité d'une soudure, et
- une deuxième phase d'utilisation de la logique ou d'un modèle de qualification pour qualifier la qualité de la soudure.

Un mode de réalisation d'un procédé de contrôle de qualité d'une soudure selon l'invention est décrit en détail ci-après.

Pour industrialiser, un tel procédé de contrôle de qualité d'une soudure, il faut que les moyens de mise en oeuvre de la méthode soient accessibles à deux types d'utilisateurs :

- un ingénieur-technicien qui est en charge de la première phase mentionnée plus haut, c'est-à-dire de définir la logique de qualification pour qualifier une soudure, ou, autrement dit, de définir un modèle de discrimination des soudures ;
- un utilisateur du procédé qui met en oeuvre la deuxième phase mentionnée plus haut, c'est-à-dire qui utilise la logique de qualification ou le modèle de discrimination. L'utilisateur se trouve typiquement sur un site de production comme une usine.

Dans une première étape de la première phase, après avoir réalisé des essais de soudures, on classe ces essais de soudure dans l'une des trois catégories suivantes : « conforme », « incertain » et « non conforme » à partir des mesures $T_{i,j}$ de résistance mécanique, comme des mesures de tenue en traction et de critères CdC de tenue mécanique données par un cahier des charges.

Il y a trois possibilités de classement des essais de soudure, par exemple :

1) Essai i conforme cordon j : $\forall$j Ti,j > CdC ET Pr (Ti,j < CdC) << $\theta$ =10%
2) Essai i incertain (les cordons sont limites et le taux de non-conformité estimé TNC >10%) cordon j : $\forall$j Ti,j > CdC ET Pr (Ti,j < CdC) > $\theta$ =10%
3) Essai i non conforme cordon j : $\forall$j Ti,j < CdC

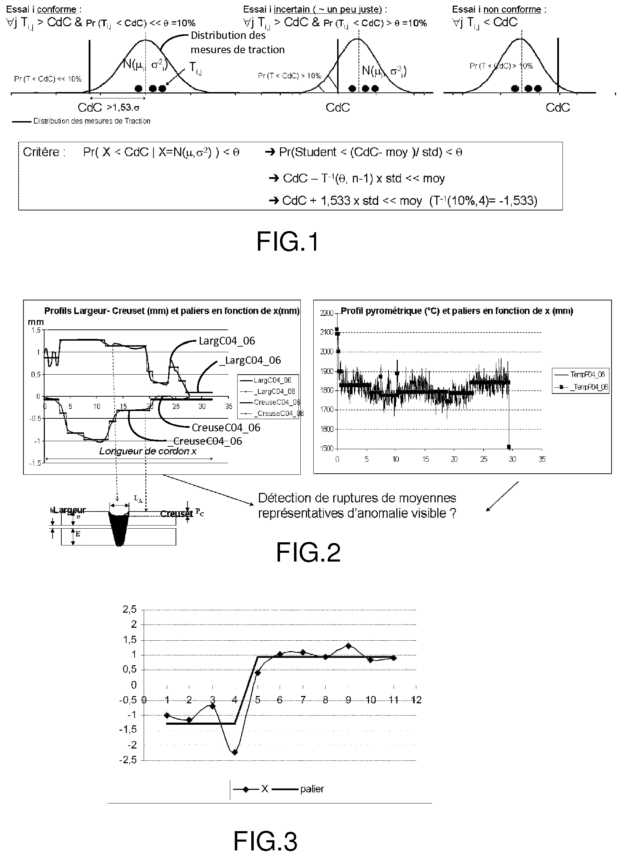

Ces trois catégories sont illustrées à la figure 1.

A partir d'un échantillon de n=5 mesures (ou plus de préférence) pour chaque essai :

- l'essai i est déclaré conforme, si :

$$\begin{cases} T_{i,j} > CdC \\ CdC - T_{10\%}^{-1}(n-1) \times s_i \le \overline{x_i} \end{cases}$$

$$s_i = \sqrt{\frac{1}{n-1}\sum_{j=1}^{n=5}\left(x_{i,j} - \overline{x_i}\right)^2} \qquad \overline{x_i} = \frac{1}{n}\sum_{j=1}^{n=5} x_{i,j}$$

$T_{10\%}^{-1}(n-1)$ = quantile à 10% de la loi de Student à ($n$-1) degrés de liberté $T_{10\%}^{-1}(4) = -1,533$

- l'essai i est déclaré incertain, si le taux de non-conformité estimé TNC est supérieur à 10% soit si :

$$\begin{cases} T_{i,j} > CdC \\ CdC - T_{10\%}^{-1}(n-1) \times s_i > \overline{x_i} \end{cases}$$

- l'essai i est déclaré non conforme si :
$\forall j\ T_{i,j} < CdC$

Dans une deuxième étape, on met en oeuvre la méthode, par exemple le test de Hinkley, pour effectuer un lissage par ruptures de moyennes.

Le lissage par ruptures a pour but de détecter des anomalies (par exemple des trous) sur des signaux de caractéristiques pyrométriques et profilométriques mesurés en temps réel lors de la soudure. Par exemple la mesure est effectuée grâce à une caméra laser.

Pour un cordon de soudure, l'analyse par ruptures porte (voir figure 2) :

1) en profilométrie, sur un signal de mesure caractéristique du cordon, par exemple la profondeur de creuset ou la largeur ;
2) en pyrométrie, sur les mesures $X_i$ de température i (en °C).

Le lissage par détection de ruptures de moyennes des signaux profilométriques et pyrométriques mesurés par caméra laser vise à diagnostiquer d'éventuelles anomalies qui pourraient être repérées à l'oeil par les contrôleurs qualité sur site de production tels que des trous ; puis à filtrer la « variabilité naturelle » parasite du signal. Le nombre de mesure du signal dépend de la longueur du cordon, et de la fréquence d'échantillonnage.

La méthode de Hinkley est fondée sur le maximum de vraisemblance pour la détection d'une rupture de moyennes dans une fenêtre de n observations supposées Gaussiennes.

Soit une fenêtre de n observations $\{X_1, ...., X_n\}$ supposées Gaussiennes de moyenne $\mu_o$ et de variance $\sigma^2$. Le test de Hinkley teste l'apparition d'une rupture de moyennes à variance supposée constante à l'observation $X_r$.

$$H_o \ \forall i \in \{1,..,n\} \ X_i = N(\mu_o, \sigma^2)$$

$$H_a \ \exists r \in \{2,..,n\} \begin{cases} \forall i \in \{1,..,r-1\} \ X_i = N(\mu_1, \sigma^2) \\ \forall i \in \{r,..,n\} \ X_i = N(\mu_2, \sigma^2) \end{cases}$$

L'écart-type $\sigma$ est préalablement estimé sur n observations $\{X_1, ...., X_n\}$ par exemple comme moyenne de deux estimateurs indépendants :

1) la moyenne des étendues $W_i = |X_{2i} - X_{2i-1}|$ de deux mesures consécutives $\{X_{2i}, X_{2i-1}\}$ ramenée à l'étendue moyenne (1,128) de deux observations issues d'une loi de Gauss centrée réduite (estimateur robuste) ;

2) la racine carrée de la moyenne des variances $s_i^2 = \dfrac{(X_{2i} - X_{2i-1})^2}{2}$ de deux mesures consécutives $\{X_{2i}, X_{2i-1}\}$.

$$\sigma = Moyenne\left( \frac{1}{Ent(n/2)} \sum_{i=1}^{Ent(n/2)} \frac{|X_{2i} - X_{2i-1}|}{1,128} \ ; \ \sqrt{\frac{1}{Ent(n/2)} \sum_{i=1}^{Ent(n/2)} \frac{(X_{2i} - X_{2i-1})^2}{2}} \right)$$

On recherche alors un point r de rupture potentielle le plus vraisemblable.
Le rapport de vraisemblance RV s'écrit dans la fenêtre $\{X_1, ...., X_n\}$ :

$$RV = \frac{V(H_a)}{V(H_o)} = \frac{\Pi_{i=1}^{r-1} \frac{1}{\sigma\sqrt{2\pi}} \exp\left(-\frac{1}{2}\left(\frac{X_i - \mu_1}{\sigma}\right)^2\right) \times \Pi_{i=r}^{n} \frac{1}{\sigma\sqrt{2\pi}} \exp\left(-\frac{1}{2}\left(\frac{X_i - \mu_2}{\sigma}\right)^2\right)}{\Pi_{i=1}^{n} \frac{1}{\sigma\sqrt{2\pi}} \exp\left(-\frac{1}{2}\left(\frac{X_i - \mu_o}{\sigma}\right)^2\right)}$$

$$Log(RV) = \sum_{i=1}^{r} -\frac{1}{2}\left(\frac{X_i - \mu_1}{\sigma}\right)^2 + \sum_{i=r}^{n} -\frac{1}{2}\left(\frac{X_i - \mu_2}{\sigma}\right)^2 + \sum_{i=1}^{n} \frac{1}{2}\left(\frac{X_i - \mu_o}{\sigma}\right)^2$$

$$Log(RV) = \frac{(\mu_1 - \mu_o)}{\sigma^2} \sum_{i=1}^{r-1}\left( X_i - \frac{(\mu_o + \mu_1)}{2}\right) + \frac{(\mu_2 - \mu_o)}{\sigma^2} \sum_{i=r}^{n}\left( X_i - \frac{(\mu_o + \mu_2)}{2}\right)$$

$$Log(RV) = \left[ (r-1) \times \frac{(\mu_1 - \mu_o)^2}{2.\sigma^2} + (n-(r-1)) \times \frac{(\mu_2 - \mu_o)^2}{2.\sigma^2} \right]$$

Afin de pénaliser les ruptures aux bords de la fenêtre des n mesures, on pondère ce rapport par :

$$Log(RVP) = \left(\frac{r-1}{n}\right) \times \left(1 - \frac{r-1}{n}\right) \times Log(RV)$$

$$Log(RVP) = \left(\frac{r-1}{n}\right) \times \left(1 - \frac{r-1}{n}\right) \times \left[(r-1) \times \frac{(\mu_1 - \mu_o)^2}{2.\sigma^2} + (n - (r-1)) \times \frac{(\mu_2 - \mu_o)^2}{2.\sigma^2}\right]$$

$$\mu_o = \frac{1}{n}\sum_{i=1}^{n} X_i \quad \mu_1 = \frac{1}{r-1}\sum_{i=1}^{r-1} X_i \quad \mu_2 = \frac{1}{n-(r-1)}\sum_{i=r}^{n} X_i$$

Cela permet de privilégier des ruptures sur des longs paliers (plutôt au centre de la fenêtre) et d'éliminer des ruptures anarchiques dues à des erreurs de mesure ou des données aberrantes lesquelles conduiraient à des paliers de taille 1 qui ne présentent aucun intérêt.

On retient le point de rupture potentielle $2 \leq r \leq n$ qui maximise la quantité Log(RVP). Il y en a toujours un ; la question est ensuite de savoir s'il est pertinent.

Pour ce faire, on met en place une étape de validation du point de rupture.
Un test d'égalité des moyennes ($\mu_1 = \mu_2$) permet d'accepter ou de refuser l'hypothèse Ho d'égalité des moyennes au point de rupture potentielle r.

Sous $H_o$

$$T = \frac{\mu_1 - \mu_2}{\sigma \times \sqrt{\frac{1}{r-1} + \frac{1}{n-(r-1)}}} = N(0,1)$$

$$\mu_1 = \frac{1}{r-1}\sum_{i=1}^{r-1} X_i$$

$$\mu_2 = \frac{1}{n-(r-1)}\sum_{i=r}^{n} X_i$$

Si ( $\Pr\left(U > |T|\right) \leq \frac{\alpha}{2} = 0,135\%$ $\rightarrow$ on refuse $H_o$ il y a rupture

si on accepte $H_o$ il y n'a pas rupture

soit si

$$|T| > U^{-1}\left(1 - \frac{\alpha}{2}\right) = 3$$

$U$ = Loi Normale centrée réduite

On poursuit ensuite la détection en ajoutant k mesures, par exemple k=5.
Si la rupture est validée ($H_o$ refusée), on clos le palier sur la séquence {1, ..., r-1} et on réitère la procédure de détection en ajoutant une nouvelle séquence de k=5 mesures { $X_{n+1}$, ... $X_{n+k}$} autrement dit on cherche de nouvelles ruptures sur la série {$X_r$, ... $X_n$, $X_{n+1}$, ... $X_{n+k}$} ; et ce jusqu'à la fin des données.

Si la rupture est invalidée ($H_o$ acceptée), on réitère la procédure de détection en ajoutant une nouvelle séquence de k=5 mesures {$X_{n+1}$, ... $X_{n+k}$} autrement dit on cherche de nouvelles ruptures sur la série {$X_1$, ... $X_n$, $X_{n+1}$, ... $X_{n+k}$} ; et ce jusqu'à la fin des données.

Un exemple de mise en oeuvre des étapes précédentes et décrit ci-après.

Soit une série de n=11 observations {$X_1$, ...., $X_n$} supposées Gaussiennes, ces observations étant récapitulées dans le tableau ci-dessous.

| n° mesure | 1 | 2 | 3 | 4 | 5 | 6 | 7 | 8 | 9 | 10 | 11 |
|---|---|---|---|---|---|---|---|---|---|---|---|
| X | -1 | -1.138 | -0.68 | -2.222 | 0.415 | 1.035 | 1.104 | 0.939 | 1.293 | 0.85 | 0.89 |
| palier | -1,261 | -1,281 | -1,261 | -1,261 | 0,832285711 | 0,832285711 | 0,932285711 | 0,932285711 | 0,932285711 | 0,932285711 | 0,932285714 |
| Etendue $W_i=|x_i-x_{i-1}|$ | | 0,138 | | 1,542 | | 0,62 | | 0,165 | | 0,443 | |
| Variance $s = (x_i - x_{i-1})$ | | 0,009522 | | 1,188882 | | 0,1922 | | 0,0136125 | | 0,0981245 | |

**Estimation de l'écart type**

| | |
|---|---|
| $\sigma = Wbar /1,1$ | 0,51560284 |
| | 0,5481498 |
| $\sigma = (s\text{-}bar)^{1-}$ | **0,53187632** |
| risque $\alpha$ | 0,27% |

7

On retient σ = 0,531 comme estimateur moyen des deux estimations indépendantes de l'écart-type :

- la moyenne des étendues $W_i$ de deux mesures consécutives $\{X_{2i}, X_{2i-1}\}$ ramenée à l'étendue moyenne (1,128) de deux observations issues d'une loi de Gauss centrée réduite (0.515) ;
- la racine carrée de la moyenne des variances $s_i^2$ de 2 mesures consécutives $\{X_{2i}, X_{2i-1}\}$ (0.548).

On analyse une première fenêtre de k mesures, k=5.
Soit la première fenêtre de n=5 observations $\{X_1, ...., X_n\}$ :

| | point de rupture $N \geq r > 1$ | 1 | 2 | 3 | 4 | 5 |
|---|---|---|---|---|---|---|
| | serie de mesures | -1 | -1,138 | -0,68 | -2,222 | 0,415 |
| $\mu_0$ | -0,925 | | | -0,925 | | |
| nobs | 5 | | | | | |
| $\mu_i$ | | -1 | -1,069 | -0,9393333 | -1,26 | |
| $n_i$ | | 1 | 2 | 3 | 4 | |
| $\mu_2$ | | -0,90625 | -0,829 | -0,9035 | 0.415 | |
| $n_2$ | | 4 | 3 | 2 | 1 | |
| LPRV | | 0,00198839 | 0,02931998 | 0,00065361 | 0,63472893 | |
| $(! \mu_i-\mu_2! / \sigma.(1/n_1 + 1/n_2)^{\wedge}0,5)$ | | | | | 2,81675551 | |
| RUPTURE ? 1/0 | | | | | 0 | |

Le point de rupture potentiel r est déterminé à r=5, avec une valeur maximale du rapport de vraisemblance pondéré LPRV=0,6347.

$$T = \left| \frac{\mu_1 - \mu_2}{\sigma \times \sqrt{\dfrac{1}{r-1} + \dfrac{1}{n-(r-1)}}} \right|$$

La valeur test est alors de 2,8167, l'hypothèse d'égalité des moyennes (absence de rupture) $H_o$ est alors acceptée (T < $U^{-1}(1-\alpha/2)$ = 3).

On analyse ensuite une deuxième fenêtre de k mesures, k=5. La seconde fenêtre comporte n=10 observations $\{X_1, ...., X_n\}$ :

| | point de rupture $N \geq r > 1$ | 1 | 2 | 3 | 4 | 5 | 6 | 7 | 8 | 9 | 10 |
|---|---|---|---|---|---|---|---|---|---|---|---|
| | serie de mesures | -1 | -1,138 | -0,68 | -2,222 | 0,415 | 1,035 | 1,104 | 0,939 | 1,293 | 0,85 |
| $\mu_0$ | 0,0596 | | | | | | | | | | |
| nobs | 10 | | | | | | | | | | |
| $\mu_i$ | | -1 | -1,069 | -0,9393333 | | -0,925 | -0,5983333 | -0,3551429 | -0,193375 | -0,0282222 | |
| $n_i$ | | 1 | 2 | 3 | | 5 | 6 | 7 | 8 | 9 | |
| $\mu_2$ | | 0,17733333 | 0,34175 | 0,48771429 | | 1,0442 | 1,0465 | 1,02733333 | 1,0715 | 0,85 | |
| $n_2$ | | 9 | 8 | 7 | | 5 | 4 | 3 | 2 | 1 | |
| LPRV | | 0,19844154 | 0,9005105 | 1,58731902 | | 4,28359468 | 2,7543237 | 1,48971301 | 0,72390884 | 0,11041868 | |
| $(! \mu_i-\mu_2! / \sigma.(1/n_1 + 1/n_2)^{\wedge}0,5 )$ | | | | | 6,40598658 | | | | | | |
| RUPTURE ? 1/0 | | | | | 1 | | | | | | |

Le point de rupture potentiel r est déterminé à r=5, avec une valeur maximale du rapport de vraisemblance pondéré LPRV=4,9243.

$$T = \left| \frac{\mu_1 - \mu_2}{\sigma \times \sqrt{\dfrac{1}{r-1} + \dfrac{1}{n-(r-1)}}} \right|$$

La valeur test est alors de 6,405, l'hypothèse d'égalité des moyennes (absence de rupture) $H_o$ est alors refusée ($T \gg U^{-1}(1-\alpha/2) = 3$).

On clos le palier sur la séquence {1, ..., r-1} dont on a estimé la moyenne à $\mu_1$=-1,26.

On analyse ensuite une troisième fenêtre à partir du point r=5 après ajout de k mesures, k=1.

On réitère la procédure de détection en ajoutant une nouvelle séquence de k=1 mesure (la dernière) $\{X_{n+1}\}$ autrement dit on cherche une nouvelle rupture sur la série $\{X_r, ... X_n, X_{n+1}\}$ de 7 mesures.

EP 2 590 775 B1

| | point de rupture $N \geq r > 1$ | 1 | 2 | 3 | 4 | 5 | 6 | 7 | 8 | 9 | 10 | 11 |
|---|---|---|---|---|---|---|---|---|---|---|---|---|
| | serie de mesures | | | | | 0,415 | 1,035 | 1,104 | 0,939 | 1,293 | 0,85 | 0,89 |
| $\mu_o$ | 0,93228571 | | | | | | | | | | | |
| nobs | 7 | | | | | | | | | | | |
| $\mu_i$ | | | | | | 0,415 | 0,725 | 0,85133333 | 0,87325 | | 0,93933333 | |
| $n_i$ | | | | | | 1 | 2 | 3 | 4 | 5 | 6 | |
| $\mu_2$ | | | | | | 1,0185 | 1,0152 | 0,993 | 1,011 | | | |
| $n_2$ | | | | | | 6 | 5 | 4 | 3 | 2 | | |
| LPRV | | | | | | 0,06756342 | 0,04339597 | 0,01489198 | 0,01407992 | 0,00391821 | 0,00045148 | |
| $\sigma (1/n_1 + 1/n_2)^{0,5}$ | | | | | | 1,05049315 | | | | | | |
| RUPTURE ? 1/0 | | | | | | 0 | | | | | | |

Le point de rupture potentiel r est déterminé à r=6, avec une valeur maximale du rapport de vraisemblance pondéré LPRV=0,0675.

$$T = \left| \frac{\mu_1 - \mu_2}{\sigma \times \sqrt{\dfrac{1}{r-1} + \dfrac{1}{n-(r-1)}}} \right|$$

La valeur test est alors de 1,0504, l'hypothèse d'égalité des moyennes (absence de rupture) $H_{un}$ est alors acceptée (T < $U^{-1}(1-\alpha/2)$ = 3).

La moyenne du palier est alors $H_o$=0,932 et le lissage est terminé.

Les observations $X_i$ et les paliers obtenus sont représentés sur le graphique de la figure 3.

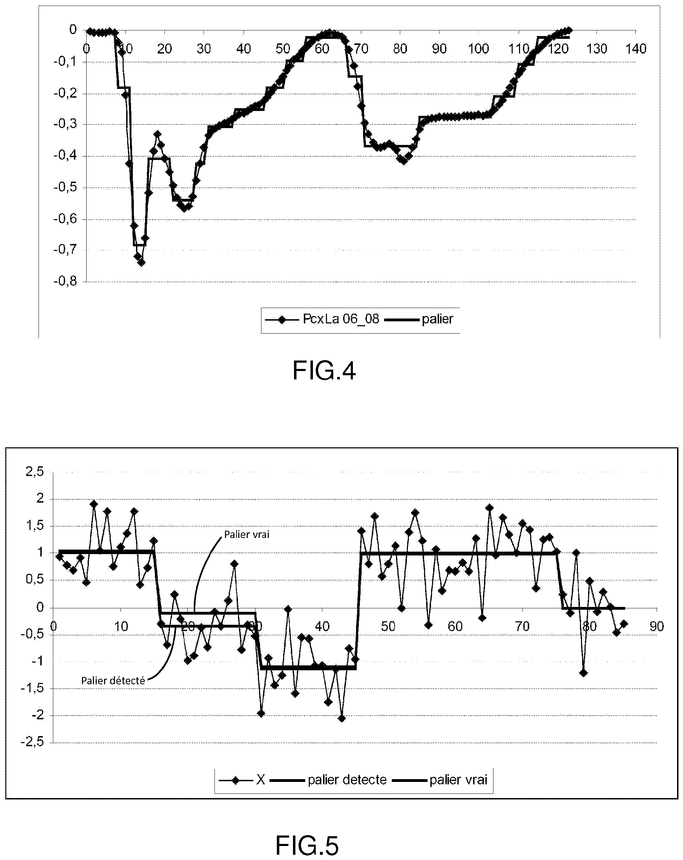

Le graphique de la figure 4 illustre un autre exemple de caractéristiques d'un cordon de soudure dans lequel un lissage par rupture a été effectué sur une série de 123 mesures $X_i$ de profilométrie du cordon. Les mesures des caractéristiques et le lissage par paliers sont représentés.

Le graphique de la figure 5 illustre encore un autre exemple de calculs de détection de ruptures sur une simulation de 85 mesures Gaussiennes d'écart-type réel $\sigma$=0,5 pour lesquelles les vraies moyennes des paliers étaient naturellement connues. On notera la similitude des paliers estimés et des vrais paliers.

La détection de rupture, telle que décrite précédemment, est réalisée sur des signaux pyrométriques et profilométriques qui correspondent au cordon soudé. Plus particulièrement, il est préférable d'éliminer toutes les données non représentatives du cordon, c'est-à-dire toutes les données prises en compte avant ou après le cordon soudé. En pratique et pour l'utilisation en série, cette phase d'élimination est inutile. En effet, les signaux de pyrométrie et de profilométrie ne sont enregistrés que durant la phase de soudure.

Postérieurement au lissage par rupture, on compresse le signal pyrométrique ou profilométrique pour extraire des variables explicatives $\{X_{1\%}, X_{5\%}, ...., X_{95\%}, X_{99\%}\}$ d'un modèle logistique de discrimination.

Soit la fenêtre de n observations $\{\_X_1, ...., \_X_n\}$ supposées Gaussiennes correspondant aux valeurs moyennes des paliers des signaux pyrométriques ou profilométriques préalablement lissés par détection de ruptures des mesures $\{X_1, ...., X_n\}$ qu'illustre la courbe en paliers de la figure 4 :

Pour compresser le signal lissé par ruptures $\{\_X_1, ...., \_X_n\}$ :

1. on construit une fonction de répartition empirique CdFE des données lissées par ruptures $\{\_X_1, ...., \_X_n\}$ :

1.1. on trie les n observations $\{\_X_1, ...., \_X_n\}$ par ordre croissant,

$$CdFE(\_X_i) = p_i = \frac{(i-0,3)}{(n+0,4)}$$

1.2. on calcule où i est le rang de l'observation $\_X_i$ après tri.

2. on extrait les quantiles $\{X_{1\%}, X_{5\%}, X_{10\%}, X_{15\%}, ...., X_{95\%}, X_{99\%}\}$ de probabilité p=1%, 5%, ...., 99% par interpolation linéaire entre les quantiles $[X_{p^-\%}, X_{p^+\%}]$ de probabilité $p^-$% et $p^+$% de la fonction de répartition empirique au niveau p%.

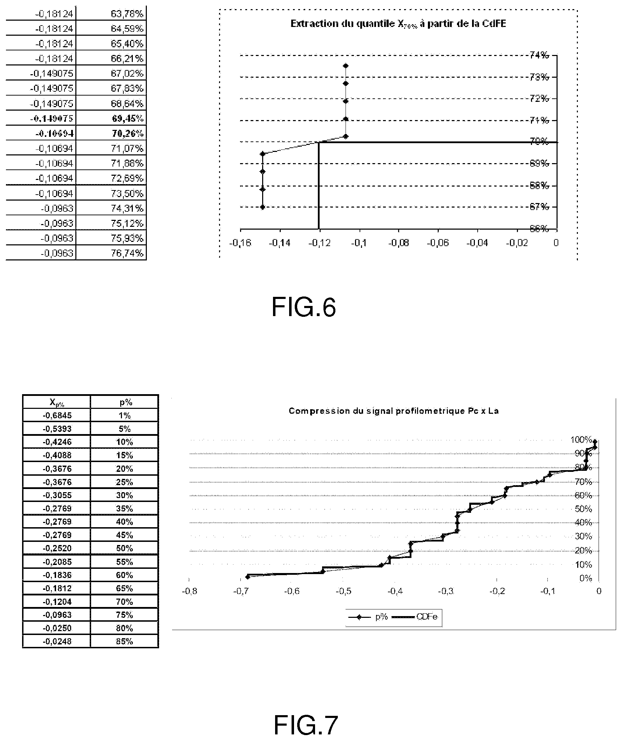

Exemple : Pour le seuil p=70% on retient les points abscisses $[X_{p^-\%}, X_{p^+\%}]$=$[X_{69,45\%}, X_{70,26\%}]$=[-0,19075, -0,10694] aux ordonnées $[p^-\%, p^+\%]$=[69,45%, 70,26%] à partir desquels on estime le quantile $X_{70\%}$ = -0,1204 par interpolation linéaire, comme illustrée par la figure 6.

L'extraction des quantiles $\{X_{1\%}, X_{5\%}, X_{10\%}, X_{15\%}, ...., X_{95\%}, X_{99\%}\}$ à partir de la CdFE est donc réalisée comme décrit précédemment et illustré à la figure 7. En d'autres termes, on réalise une «compression» de la fonction de répartition empirique CdFE.

Dans une étape suivante, on définit un modèle logistique de discrimination des soudures.

Pour ce faire, le modèle logistique et du type régression logistique. La régression logistique est une technique statistique qui a pour objectif, à partir d'un fichier de n observations, de produire un modèle permettant de prédire les valeurs prises par une variable catégorielle Y (le plus souvent) binaire, à partir de la série de variables explicatives continues $\{X_1, X_2, ..., X_p\}$.

La régression logistique est utilisée dans des domaines techniques très éloignés de celui de l'invention :

- dans le domaine bancaire, pour détecter les groupes à risque lors de la souscription d'un crédit ;
- en économétrie, pour expliquer les intentions de vote aux élections ;
- en médecine, pour établir un diagnostic à partir des critères obtenus sur analyses médicales quant ceux-ci permettent de discriminer des sujets malades par rapport à des sujets sains.

Par rapport aux techniques connues en régression, notamment la régression linéaire, la régression logistique se distingue essentiellement par le fait que la variable expliquée Y est catégorielle. En tant que méthode de prédiction, la régression logistique est comparable à l'analyse discriminante.

La finalité est de prédire à l'aide de 21 variables quantitatives $\{X_{1\%}, X_{5\%}, X_{10\%}, X_{15\%}, ...., X_{95\%}, X_{99\%}\}$ issues de la compression des signaux pyrométriques et profilométriques du cordon :

a) la probabilité d'un oui (1 : le cordon est non conforme) ou d'un non (0 : le cordon est peut être conforme) pour la réponse $Y_{NC/C}$ vis-à-vis de la tenue mécanique à la traction, et

b) la probabilité d'un oui (1 : le cordon est incertain) ou d'un non (0 : le cordon est conforme) pour la réponse $Y_{I/C}$ vis-à-vis de la tenue mécanique à la traction

Cela correspond à modéliser la variable réponse Y binaire (1 le cordon est non conforme / 0 le cordon est conforme) en fonction de 21 variables $\{X_{1\%}, X_{5\%}, X_{10\%}, X_{15\%}, ...., X_{95\%}, X_{99\%}\}$ et d'un terme constant soit un modèle à p+1=22 paramètres $\beta_i$ :

$Y_i = \beta_o + \beta_1.X_{1\%} + \beta_2.X_{5\%} + ... + \beta_{21}.X_{99\%} + \varepsilon_i$  $Y_i = 0$ ou 1, pour i=1,...,n et $\varepsilon_i = N(0,\sigma^2)$

La modélisation logistique donne de bons résultats. Les variables explicatives $\{X_{1\%}, X_{5\%}, X_{10\%}, X_{15\%}, ..., X_{95\%}, X_{99\%}\}$ s'apparentent ici à des valeurs représentant de l'ordre 5% de la longueur du cordon.

Le modèle logistique comprend, par exemple, deux sous-modèles logistiques $\{Y_{NC/C}, Y_{I/C}\}$. Le modèle logistique peut aussi comprendre moins de deux sous-modèles logistiques ou plus de deux sous-modèles logistiques.

Ce modèle logistique s'applique alors aux signaux caractéristiques du cordon, compressés par la méthode précédente définis ci-dessus : signaux de pyrométrie ou signaux de profilométrie.

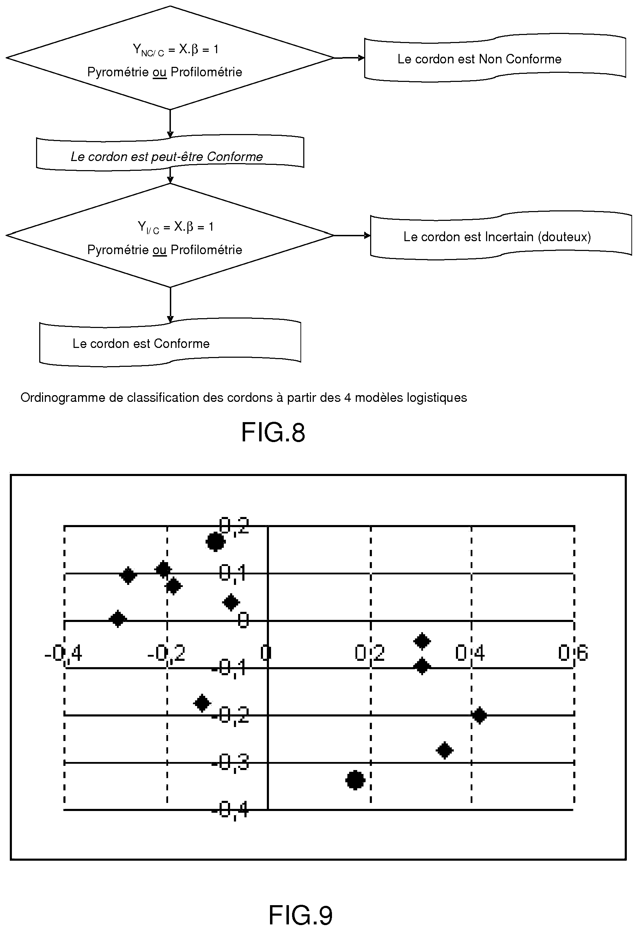

La règle de décision portant sur la conformité ou la non-conformité du cordon a été décrite précédemment et est illustrée par l'ordinogramme de la figure 8.

La régression logistique diffère fondamentalement de la régression linéaire classique. Dans le modèle de régression linéaire classique :

$$Y_i = X_i.\,\beta + \varepsilon_i$$

$Y_i = 0$ ou 1, pour i=1,...,n $\varepsilon_i = N(0,\sigma^2)$

puisque $E(\varepsilon_i) = 0$, alors $E(Y_i) = X_i.\beta$ avec E l'espérance mathématique.

Quand la réponse $Y_i$ est binaire et suit une loi de Bernouilli B(p), nous avons aussi :

$$P(Y_i = 1) = p_i$$

et

$$P(Y_i = 0) = 1 - p_i$$

avec $p_i \in [0,1]$

Donc,

$$E(Y_i) = 1 \times p_i + 0 \times (1 - p_i) = p_i$$

ainsi

$$E(Y_i) = X_i.\beta = p_i$$

Avec la modélisation linéaire pour une réponse oui/non, nous sommes confrontés au problème que $E(Y_i) = X_i.\beta$ n'est pas contrainte à prendre des valeurs entre 0 et 1, alors que $p_i$ représente une probabilité qui doit prendre des valeurs dans l'intervalle [0,1]. Sachant que lorsqu'on modélise une variable réponse Y binaire, la forme de la relation est souvent non linéaire ; nous préconisons la fonction non linéaire de type logistique car elle donne de bons résultats et qu'elle est numériquement simple à manipuler.

De fait et comme pour la régression linéaire, le modèle de régression logistique se définit par :

$P(Y_i=1 \mid X_i) = P(Y_i > 0) = P(X_i.\beta > -\varepsilon_i) = F(X_i\beta)$ où F est la fonction logistique de répartition de $-\varepsilon_i$

$$\begin{cases} P(Y = 1 / X = X_i) = \pi(x_i) = F(X_i.\beta) = \dfrac{e^{X_i.\beta}}{1 + e^{X_i.\beta}} = \dfrac{1}{1 + e^{-X_i.\beta}} \\[4mm] P(Y = 0 / X = X_i) = 1 - \pi(x_i) = \dfrac{1}{1 + e^{X_i.\beta}} \end{cases}$$

On remarquera que Y=1 si $e^{-X_i.\beta}$ est quasi nul soit si $X\beta$ est fortement positif (>10), et que Y=0 si $e^{X_i.\beta}$ est quasi nul soit si $X\beta$ est fortement négatif (<-10).

Pour utiliser le modèle à des fins de description de la relation ou de prédiction (qualification Y d'un nouveau cordon à partir des mesures X), nous avons besoin d'estimer les paramètres $\beta$ du modèle. Pour ce faire, on peut utiliser, la méthode du maximum de vraisemblance, détaillée ci-après (c'est-à-dire de la probabilité maximale) pour estimer le vecteur $\beta$. (De manière parallèle, pour une régression linéaire, on utilise typiquement la méthode des moindres carrés).

$$V(\beta) = \Pi_{i=1,n}\, P(Y_i{=}y_i \mid X_i{=}x_i) = \Pi\, P(Y_i{=}1 \mid X_i{=}x_i)\,.\,\Pi\, P(Y_i{=}0 \mid X_i{=}x_i)$$

avec

$$\begin{cases} P(Y = 1 / X = X_i) = \pi(x_i) = \dfrac{1}{1 + e^{-X_i.\beta}} \\[4mm] P(Y = 0 / X = X_i) = 1 - \pi(x_i) = \dfrac{1}{1 + e^{X_i.\beta}} \end{cases}$$

La Log-vraisemblance s'écrit : $f(\vec{\beta}) = \ln(V(\vec{\beta})) = \Sigma_i$ -ln(1+ exp(-X$\beta$))$_{(Yi=1)}$-ln(1+ exp(X$\beta$))$_{(Yi\,-0)}$

Le maximum s'obtient en annulant les dérivées partielles : $d(\ln(V(\beta)))/d\beta = 0$

Les estimateurs $\beta$ sont obtenus par une procédure numérique (Optimisation par gradient) car il n'y a pas d'expression analytique.

Méthode de Gradient fondée sur le développement de Taylor

$$f(\vec{\beta}) = f(\vec{\beta}_o) + (\vec{\beta} - \vec{\beta}_o)f'(\vec{\beta}_o) + \frac{(\vec{\beta} - \vec{\beta}_o)^2}{2}.f''(\vec{\beta}_o) + \ldots$$

$$f'(\vec{\beta}) = 0 \rightarrow \vec{\beta} = \vec{\beta}_o - \frac{f'(\vec{\beta}_o)}{f''(\vec{\beta}_o)} = \vec{\beta}_o - H^{-1} \times G(\vec{\beta}_o)$$

la solution est un maximum si $f''(\vec{\beta}_o) < 0$

$H$ : matrice de Hessian H$_{(p,p)}$ si $\vec{\beta}$ comporte p paramètres à estimer

$$H_{i,j} = \lim_{h_i,h_j \to 0} \frac{\delta^2 f}{\delta\beta_i\beta_j} = \frac{f(\vec{\beta + h_i.e_i + h_j.e_j}) - f(\vec{\beta + h_i.e_i}) - f(\vec{\beta + h_j.e_j}) + f(\vec{\beta})}{h_i.h_j}$$

$$G_i = \lim_{h_i \to 0} \frac{\delta f}{\delta\beta_i} = \frac{f(\vec{\beta + h_i.e_i}) - f(\vec{\beta})}{h_i} \qquad h_i = 0{,}001$$

$G$ : vecteur gradient

C'est une méthode de complexité p$^2$ car elle requiert pour les p paramètres $\beta_i$ à chaque itération

- un calcul de la fonction $f(\vec{\beta}) = \ln(V(\vec{\beta}))$
- p calculs de la fonction $f(\vec{\beta + h_i.e_i})$ pour estimer les dérivées

$$G_i = \lim_{h_i \to 0} \frac{\delta f}{\delta \beta_i} = \frac{f\left(\vec{\beta + h_i.e_i}\right) - f\left(\vec{\beta}\right)}{h_i}$$

$$H_{i,j} = \lim_{h_i,h_j \to 0} \frac{\delta^2 f}{\delta \beta_i \beta_j}$$

- p(p+1)/2 calculs de la fonction $f(\vec{\beta + h_i.e_i + h_j.e_j})$ pour estimer les dérivées seconde :

$$Y_{NC/C} = \frac{1}{1 + \exp-\left(\beta_o + \beta_1.X1 + \beta_2.X2\right)}$$

Dans le cas d'un exemple de sous-modèle logistique du type
à k=2 variables explicatives continues X1, X2 et p=k+1 paramètres

Soit n=10 observations, pour lesquelles on dispose de deux variables explicatives continues X1, X2 et de la réponse binaire $Y_{NC/C}$, et deux observations complémentaires pour lesquelles on cherche à prédire la réponse $Y_{NC/C}$, comme indiqué dans le tableau ci-dessous et représenté à la figure 9:

| X1 | X2 | $Y_{NC/C}$ |
|---|---|---|
| 0,345 | -0,273 | 1 |
| 0,415 | -0,199 | 1 |
| 0,301 | -0,095 | 1 |
| 0,303 | -0,042 | 1 |
| -0,295 | 0,006 | 0 |
| -0,273 | 0,097 | 0 |
| -0,186 | 0,072 | 0 |
| -0,074 | 0,039 | 0 |
| -0,129 | -0,172 | 0 |
| -0,206 | 0,109 | 0 |
| 0,173 | -0,1 | ? |
| -0,34 | 0,164 | ? |

Pour construire le modèle de régression logistique $Y_{NC/C} = \frac{1}{1 + \exp-\left(\beta_o + \beta_1.X1 + \beta_2.X2\right)}$ on effectue les étapes suivantes :

Dans une première étape, on vérifie que la matrice des variables explicatives X = [1, X1, X2] est de plein rang. Pour ce faire, on effectue une régression linéaire multiple Y= βo+β1.X1+β2.X2+ ε. Le vecteur des p=3 paramètres β est donné par la formule analytique : β = (X'X)⁻¹.X'Y.

La matrice X de dimension (n=10, p=3) est :

| Cte | X1 | X2 |
|---|---|---|
| 1 | 0,345 | -0,273 |
| 1 | 0,415 | -0,199 |
| 1 | 0,301 | -0,095 |
| 1 | 0,303 | -0,042 |
| 1 | -0,295 | 0,006 |
| 1 | -0,273 | 0,097 |
| 1 | -0,186 | 0,072 |
| 1 | -0,074 | 0,039 |
| 1 | -0,129 | -0,172 |
| 1 | -0,206 | 0,109 |

La solution est :

| | Cte | X1 | X2 |
|---|---|---|---|
| $\beta = (X'X)^{-1}.X'Y$ | 0,375277202 | 1,85247037 | 0,273184635 |

Si la matrice X'X n'est pas inversible, alors c'est qu'une ou plusieurs variables explicatives X1, X2 sont des combinaisons linéaires des autres variables. On collecte alors de nouvelles mesures [X1, X2, $Y_{NC/C}$] jusqu'à ce que la régression linéaire permette d'estimer les paramètres.

Dans une deuxième étape, on effectue une première itération du modèle logistique

$$Y_{NC/C} = \frac{1}{1 + \exp-\left(\beta_o + \beta_1.X1 + \beta_2.X2\right)}.$$

Soit les n=10 observations de l'échantillon d'apprentissage, on initialise la procédure de maximisation de la Log-vraisemblance $f(\vec{\beta}) = \ln(V(\vec{\beta}))$ avec la solution $\vec{\beta} = \vec{0}$.

La fonction $f(\vec{\beta}) = \ln(V(\vec{0})) = n.\ln(0,5) = -n.\ln(2)$ car pour toute observation $P(Y=1 \mid X=X_i) = P(Y=0 \mid X=X_i) = 0,5$.

A la convergence $\|G(\vec{\beta})\| = 0$ et l'optimum de la fonction de vraisemblance $f(\vec{\beta}) = \ln(V(\vec{\beta})) \to 0$.

Le vecteur $\vec{\beta} = \vec{0}$ des paramètres initial est :

| Par. $\beta$ | **Cte** | **X1** | **X2** | **ln(V($\beta$))** |
|---|---|---|---|---|
| | 0 | 0 | 0 | -6,931471806 |

Modèle logistique Y = 1/(1 + exp(-($\beta_0 + \beta_1.X1 + \beta_2.X2$))) : Initialisation

La solution f($\beta$)=ln(Vraisemblance)=ln(V($\beta$)) = -n. ln(2) = -10 .ln(2) = -6,93147

- Les p=3 vecteurs $\vec{\beta} = \overrightarrow{\beta + h_i.e_i}$ des paramètres du Gradient (dérivées premières) sont estimés avec $h_i$=0,001.

- Les p(p+1)/2=6 vecteurs $\vec{\beta} = \overrightarrow{\beta + h_i.e_i + h_j.e_j}$ des paramètres de la matrice de Hessian (dérivées secondes) sont estimés avec $h_i = h_j$=0,001.

| Par. $\beta$ | | **Cte** | **X1** | **X2** |
|---|---|---|---|---|
| | | 0 | 0 | 0 |
| Par. ($\beta$ + $h_i.e_i$) du Gradient | | Cte | X1 | X2 |
| Cte | | 0,001 | 0 | 0 |
| X1 | | 0 | 0,001 | 0 |
| X2 | | 0 | 0 | 0,001 |
| Par. ($\beta$ + $h_i.e_i + h_j.e_j$) du Hessian | | Cte | X1 | X2 |
| Cte | Cte | 0,002 | 0 | 0 |
| Cte | X1 | 0,001 | 0,001 | 0 |
| Cte | X2 | 0,001 | 0 | 0,001 |
| X1 | X1 | 0 | 0,002 | 0 |
| X1 | X2 | 0 | 0,001 | 0,001 |
| X2 | X2 | 0 | 0 | 0,002 |

La fonction f($\beta$)=$\sum_i \ln(P(Y=Y_i))$, les composantes du gradient G($\beta$) et du Hessian H($\beta$) sont estimés au regard des vecteurs de coefficients précédents, à partir des variables explicatives X1, X2 selon la valeur 1/0 de la réponse $Y_{NC/C}$.

# EP 2 590 775 B1

Estimation de la Clasfonction f(β) sement Estimation des composantes du gradient f(β+hi.ei)

| Cte | X1 | X2 | Y_NC/C | f(β) | | f(β + h_0.e_0) | f(β + h_1.e_1) | f(β + h_2.e_2) |
|---|---|---|---|---|---|---|---|---|
| 1 | 0,345 | -0,273 | 1 | -0,693147181 | 1 | -0,692647306 | -0,692974695 | -0,69328369 |
| 1 | 0,415 | -0,199 | 1 | -0,693147181 | 1 | -0,692647306 | -0,692939702 | -0,693246686 |
| 1 | 0,301 | -0,095 | 1 | -0,693147181 | 1 | -0,692647306 | -0,692996692 | -0,693194682 |
| 1 | 0,303 | -0,042 | 1 | -0,693147181 | 1 | -0,692647306 | -0,692995692 | -0,693168181 |
| 1 | -0,295 | 0,006 | 0 | -0,693147181 | 1 | -0,693647306 | -0,692999691 | -0,693150181 |
| 1 | -0,273 | 0,097 | 0 | -0,693147181 | 1 | -0,693647306 | -0,69301069 | -0,693195682 |
| 1 | -0,186 | 0,072 | 0 | -0,693147181 | 1 | -0,693647306 | -0,693054185 | -0,693183181 |
| 1 | -0,074 | 0,039 | 0 | -0,693147181 | 1 | -0,693647306 | -0,693110181 | -0,693166681 |
| 1 | -0,129 | -0,172 | 0 | -0,693147181 | 1 | -0,693647306 | -0,693082683 | -0,693061184 |
| 1 | -0,206 | 0,109 | 0 | -0,693147181 | 1 | -0,693647306 | -0,693044186 | -0,693201682 |
| 1 | 0,173 | -0,1 | | | 1 | | | |
| 1 | -0,34 | 0,164 | | | 1 | | | |
| | | | | **ln(V(β))** | | **ln(V(β + h_0.e_0))** | **ln(V(β + h_1.e_1))** | **ln(V(β + h_2.e_2))** |
| | | | | -6,931471806 | | -6,932473056 | -6,930208397 | -6,931851828 |

Estimation des composantes du Hessian f(β + h_i.e_i + h_j.e_j)

| Cte Cte | Cte X1 | Cte X2 | X1 X1 | X1 X2 | X2 X2 |
|---|---|---|---|---|---|
| -0,692147681 | -0,692474907 | -0,692783747 | -0,69280224 | -0,693111181 | -0,693420218 |
| -0,692147681 | -0,692439931 | -0,692746761 | -0,692732267 | -0,693039186 | -0,6933462 |
| -0,692147681 | -0,692496892 | -0,692694783 | -0,692846226 | -0,693044186 | -0,693242185 |
| -0,692147681 | -0,692495893 | -0,692668295 | -0,692844226 | -0,693016689 | -0,693189181 |
| -0,694147681 | -0,693499743 | -0,693650307 | -0,692852224 | -0,693002691 | -0,693153181 |
| -0,694147681 | -0,693510747 | -0,693695831 | -0,692874218 | -0,693059184 | -0,693244185 |
| -0,694147681 | -0,693554263 | -0,693683324 | -0,692961198 | -0,693090182 | -0,693219183 |
| -0,694147681 | -0,693610288 | -0,693666816 | -0,693073183 | -0,693129681 | -0,693186181 |
| -0,694147681 | -0,693582775 | -0,693561266 | -0,693018189 | -0,692996692 | -0,692975195 |
| -0,694147681 | -0,693544259 | -0,693701834 | -0,692941202 | -0,693098682 | -0,693256187 |
| **ln(V(β + h_i.e_i + h_j.e_j))** | **ln(V(β + h_i.e_i + h_j.e_j))** | **ln(V(β + h_i.e_i + h_j.e_j))** | **ln(V(β + h_i.e_i + h_j.e_j))** | **ln(V(β + h_i.e_i + h_j.e_j))** | **ln(V(β + h_i.e_i + h_j.e_j))** |
| -6,933476806 | -6,931209698 | -6,932852964 | -6,928945173 | -6,930588354 | -6,932231897 |

Les composantes du vecteur Gradient G(β) sont calculées pour les 3 paramètres par :

$$G_i = \lim_{h_i \to 0} \frac{\delta f}{\delta \beta_i} = \frac{f\left(\overrightarrow{\beta + h_i.e_i}\right) - f\left(\overrightarrow{\beta}\right)}{h_i} \quad h_i = 0,001 \ ;$$

la convergence (et donc la maximisation de la vraisemblance) est atteinte si la norme du vecteur G(β) est nulle ou inférieure à $10^{-6}$ ou si le déterminant de la matrice de Hessian est quasi nul ($|D| < 10^{-180}$).

| Par. β | **Cte** | **X1** | **X2** | **ln(V(β))** | |
|---|---|---|---|---|---|
| | 0 | 0 | 0 | -6,931471806 | |
| Par. (β + h_i.e_i) du Gradient | Cte | X1 | X2 | **G(β)** | **norme G(β)** |
| Cte | 0,001 | 0 | 0 | -1,00125 | 1,656236455 |
| X1 | 0 | 0,001 | 0 | 1,263408205 | |
| X2 | 0 | 0 | 0,001 | -0,380022817 | |

A la première itération, le gradient G(β) est de norme : 1,6562.

La matrice carrée symétrique de dimension (p,p) de Hessian H(β) est calculée par :

$$H_{i,j} = \lim_{h_i,h_j \to 0} \frac{\delta^2 f}{\delta \beta_i \beta_j} = \frac{f\left(\vec{\beta} + h_i.\vec{e_i} + h_j.\vec{e_j}\right) - f\left(\vec{\beta} + h_i.\vec{e_i}\right) - f\left(\vec{\beta} + h_j.\vec{e_j}\right) + f\left(\vec{\beta}\right)}{h_i.h_j}$$

| | Matrice de Hessian | | | Det de H | Matrice inverse du Hessian | | | **H$^{-1}$.G** |
|---|---|---|---|---|---|---|---|---|
| | Cte | X1 | X2 | -0,008381 | Cte | X1 | X2 | |
| Cte | -2,499999 | -0,05025 | 0,1145 | Cte | -0,484285 | -0,624306 | -2,114256 | 0,4996022 |
| X1 | -0,05025 | -0,183591 | 0,0657215 | X1 | -0,624306 | -12,04854 | -18,9188 | -7,407563 |
| X2 | 0,1145 | 0,0657215 | -0,045633 | X2 | -2,114256 | -18,9188 | -54,46557 | -1,087116 |

Elle est inversible (|Det(H)|< 10$^{-180}$), alors on estime les termes H$^{-1}$.G à partir desquels on calcule le nouveau vecteur des paramètres β = β - H$^{-1}$.G.

Par. β finaux

| b= β - H$^{-1}$.G | **Cte** | **X1** | **X2** |
|---|---|---|---|
| | -0,499602169 | 7,407563379 | 1,087115869 |

Dans une troisième étape, on effectue une deuxième itération du modèle logistique

$$Y_{NC/C} = \frac{1}{1 + \exp{-\left(\beta_o + \beta_1.X1 + \beta_2.X2\right)}} .$$

On part de la solution précédente (tableau ci-dessus) avec laquelle on estime la fonction f(β)=ln(Vraisemblance)=ln(V(β))=-1,5288 Modele logistique Y = 1/(1 + exp(-(β$_o$+β$_1$.X1+β$_2$.X2))) : Iteration 2

| Par. β | **Cte** | **X1** | **X2** | **ln(V(β))** |
|---|---|---|---|---|
| | -0,499602169 | 7,407563379 | 1,087115869 | -1,52883595 |

La vraisemblance f(β) est supérieure à l'estimation précédente (ln(V(β)) = -n.ln(2) = -6,93147).

Comme précédemment :

- les p=3 vecteurs $\vec{\beta} = \overrightarrow{\beta + h_i.e_i}$ des paramètres du Gradient (dérivées premières) sont estimés avec h$_i$=0,001 ;

- les p(p+1)/2=6 vecteurs $\vec{\beta} = \overrightarrow{\beta + h_i.e_i + h_j.e_j}$ des paramètres de la matrice de Hessian (dérivées secondes) sont estimés avec h$_i$=h$_j$=0,001.

| Modele logistique Y = 1 /(1 + exp(-($\beta_0+\beta_1$.X1+$\beta_2$X2))) : Iteration 2 | | | | | |
|---|---|---|---|---|---|
| Par. β | | **Cte** | **X1** | **X2** | |
| | | -0,499602169 | 7,407563379 | 1,087115869 | |
| Par. (β +h$_i$.e$_i$) du Gradient | | Cte | X1 | X2 | |
| Cte | | -0,498602169 | 7,407563379 | 1,087115869 | |
| X1 | | -0,499602169 | 7,408563379 | 1.087115869 | |
| X2 | | -0,499602169 | 7,407563379 | 1,088115869 | |
| Par. (β +h$_i$.e$_i$ + h$_j$.e$_j$) du Hessia | | Cte | X1 | X2 | |
| Cte | Cte | -0,497602169 | 7,407563379 | 1,087115869 | |
| Cte | X1 | -0,498602169 | 7,408563379 | 1,087115869 | |
| Cte | X2 | -0,498602169 | 7,407563379 | 1,088115869 | |
| X1 | X1 | -0,499602169 | 7,409563379 | 1,087115869 | |
| X1 | X2 | -0,499602169 | 7,408563379 | 1,088115869 | |
| X2 | X2 | -0,499602169 | 7,407563379 | 1,089115869 | |

La fonction f(β)=$\sum_i$ln(P(Y=Y$_i$)), les composantes du gradient G(β) et du Hessian H(β) sont estimées à partir des données selon la valeur 1/0 de la réponse Y$_{NC/C}$ en fonction des vecteurs de coefficients précédents.

| | | | | Estimation de la fonction Estimation des composantes du gradient f($\beta$+hi.ei) | | | | | |
|---|---|---|---|---|---|---|---|---|---|
| Cte | X1 | X2 | YNC/C | f($\beta$) | Classement | f($\beta + h_0.e_0$) | f($\beta + h_1.e_1$) | f($\beta + h_2.e_2$) | |
| 1 | 0,345 | -0,273 | | -0,158864 | 1 | -0,158717 | -0,158813 | -0,158904 | |
| 1 | 0,415 | -0,199 | 1 | -0,09038 | 1 | -0,090294 | -0,090344 | -0,090397 | |
| 1 | 0,301 | -0,095 | 1 | -0.179449 | 1 | -0,179285 | -0,1794 | -0,179465 | |
| 1 | 0,303 | -0,042 | 1 | -0,167905 | 1 | -0,16775 | -0,167858 | -0,167911 | |
| 1 | -0.295 | 0,006 | 0 | -0,066423 | 0 | -0,066488 | -0,066404 | -0,066424 | |
| 1 | -0,273 | 0,097 | 0 | -0,085481 | 0 | -0,085563 | -0,085459 | -6,085489 | |
| 1 | -0,186 -0.074 | 0,072 | | -0.1531 | 0 | -0,153242 | -0,153074 | -0.15311 | |
| 1 | | 0,039 | 0 | -0,311822 | 0 | -0,31209 | -0,311802 | -0,311832 | |
| 1 | -0,129 | -0,172 | 0 | -0,178941 | 0 | -0,177104 | -0,17692 | -0,176914 | |
| 1 | -0,206 | 0,109 | | -0,138471 | 0 | -0,1386 | -0,138444 | -0,138485 | |
| | 0,173 | -0,1 | | | 1 | | | | |
| 1 | -0,34 | 0,164 | | | 0 | | | | |
| | | | | ln(V($\beta$)) | | ln(-V($\beta + h_0.$ | ln(V($\beta + h_1$ | ln(V($\beta + h_2.e_2$)) | |
| 1 | 7,4075634 | 1,0871159 | 0 | -1,528836 | | 1,529132 | -1.528518 | -1.528931 | |
| | | | | | | | | | |

Estimation des composantes du Hessian f($\beta$+h$_i$.e$_i$+h$_j$.e$_j$)

| Cte | Cte | Cte | X1 | X1 | X2 |
|---|---|---|---|---|---|
| Cte | X1 | X2 | X1 | X2 | X2 |
| -0,15857 | -0,158666 | -0,158757 | -0,158763 | -0,158853 | -0,158944 |
| -0.090207 | -0,090258 | -0,090311 | -0,090308 | -0,090361 | -0,090415 |
| -0,179121 | -0,179235 | -0,1793 | -0.17935 | -0,179415 | -0,17948 |
| -0,167596 | -0,167704 | -0,167757 | -0,167811 | -0.167865 | -0,167918 |
| -0.066552 | -0,066469 | -0,066488 | -0,066385 | -0.066405 | -0,066424 |
| -0,085645 | -0,065541 | -0,085571 | -0,085436 | -0,065467 | -0,685497 |
| -0,153384 | -0,153216 | -0,153252 | -0,153047 | -0,153084 | -0,153121 |

(suite)

| Estimation des composantes du Hessian f($\beta$+h$_i$.e$_i$+h$_j$.e$_j$) | | | | | | | | | |
|---|---|---|---|---|---|---|---|---|---|
| Cte | Cte | Cte | X1 | X1 | X2 | | | | |
| Cte | X1 | X2 | X1 | X2 | X2 | | | | |
| -0.312358 | -0,31207 | -0,3121 | -0,311782 | -0,311812 | -0,311843 | | | | |
| -0,177266 | -0,177083 | -0,177076 | -0,1769 | -0,176893 | -0,176886 | | | | |
| -0,138729 | -0,138573 | -0,138614 | -0,138417 | -0,138458 | -0,138499 | | | | |
| | | | | | | | | | |
| | | | | | | | | | |
| **ln(V($\beta$+h$_i$** | **ln(V($\beta$+h$_i$** | **ln(V($\beta$+h$_i$** | **ln(V($\beta$+h$_i$** | **ln(V($\beta$+h$_i$** | **ln(V($\beta$+h$_i$.e$_i$+h$_j$.e$_j$)** | | | | |
| -1,529429 | -1,528814 | -1,529226 | -1,5282 | -1,528613 | -1,529025 | | | | |

EP 2 590 775 B1

Les composantes du vecteur Gradient G(β) sont calculées pour les 3 paramètres par :

$$G_i = \lim_{h_i \to 0} \frac{\delta f}{\delta \beta_i} = \frac{f\left(\overrightarrow{\beta + h_i.e_i}\right) - f\left(\overrightarrow{\beta}\right)}{h_i} \quad h_i = 0{,}001,$$

la convergence (et donc la maximisation de la vraisemblance) est atteinte si la norme du vecteur G(β) est nulle ou inférieure à $10^{-5}$.

Modèle logistique

$$Y = 1/(1 + \exp(-(\beta_o + \beta_1.X1 + \beta_2.X2))) :$$

Iteration 2

| Par. β | Cte | X1 | X2 | ln(V(β)) | |
|---|---|---|---|---|---|
| | -0,499602 | 7,4075634 | 1,0871159 | -1,528836 | |
| Par. (β + h$_i$.e$_i$) du | | | | | |
| Gradient | Cte | X1 | X2 | G(β) | norme G(β) |
| Cte | -0,498602 | 7,4075634 | 1,0871159 | -0,295969 | 0,444525 |
| X1 | -0,499602 | 7,4085634 | 1,0871159 | 0,3178901 | |
| X2 | -0,499602 | 7,4075634 | 1,0881159 | -0,094608 | |

A la deuxième itération, le gradient est de norme : 0,44452.

La matrice carrée symétrique de dimension (p,p) de Hessian H(β) est calculée par :

$$H_{i,j} = \lim_{h_i, h_j \to 0} \frac{\delta^2 f}{\delta \beta_i \beta_j} = \frac{f\left(\overrightarrow{\beta + h_i.e_i + h_j.e_j}\right) - f\left(\overrightarrow{\beta + h_i.e_i}\right) - f\left(\overrightarrow{\beta + h_j.e_j}\right) + f\left(\overrightarrow{\beta}\right)}{h_i.h_j}$$

| | Matrice de Hessian | | | Det de H | | Matrice inverse du Hessian | | | H$^{-1}$.G |
|---|---|---|---|---|---|---|---|---|---|
| | Cte | X1 | X2 | -0,000824677 | | Cte | X1 | X2 | |
| Cte | -1,174095 | -0,040640558 | 0,055446252 | | Cte | -1,000025146 | -0,831971866 | -3,75023476 | 0,38630187 |
| X1 | -0,040641 | -0,076095882 | 0,027718588 | | X1 | -0,831971866 | -26,07642953 | -36,73061205 | -4,568204597 |
| X2 | 0,0554463 | 0,027718588 | -0,020934351 | | X2 | -3,75023476 | -36,73061205 | -106,3351403 | -0,506229411 |

Si elle est inversible ($|Det(H)| < 10^{-180}$), alors on estime les termes $H^{-1}.G$ à partir desquels on calcule le nouveau vecteur des paramètres $\beta = \beta - H^{-1}.G$.

| Par. β finaux b = β - H⁻¹.G | | Cte | X1 | X2 |
|---|---|---|---|---|
| | | -0,885904 | 11,975768 | 1,5933453 |

On effectue de nouvelles itérations du modèle logistique, jusqu'à convergence (à l'itération 17 dans l'exemple).

| Modele logistique Y = 1/(1 + exp(-(β₀+β₁.X1+β₂.X2))) : Iteration 3 | | | | | | |
|---|---|---|---|---|---|---|
| Par. β | | Cte | X1 | X2 | ln(V(β)) | |
| | | -0,885904039 | 11,97576798 | 1,59334528 | -0,572437341 | |
| Par. (β +hᵢ.eᵢ) du Gradient | | Cte | X1 | X2 | G(β) | norme G(β) |
| Cte | | -0,884904039 | 11,97576798 | 1,59334528 | -0,118516471 | 0,168549145 |
| X1 | | -0,885904039 | 11,97676798 | 1,59334528 | 0,114846207 | |
| X2 | | -0,885904039 | 11,97576798 | 1,59434528 | -0,034249219 | |
| Par. (β +hᵢ.eᵢ + hᵢ.eᵢ) du Hessie | | Cte | X1 | X2 | | |
| Cte | Cte | -0,883904039 | 11,97576798 | 1,59334528 | | |
| Cte | X1 | -0,884904039 | 11,97676798 | 1,59334528 | | |
| Cte | X2 | -0,884904039 | 11,97576798 | 1,59434528 | | |
| X1 | X1 | -0,885904039 | 11,97776798 | 1,59334528 | | |
| X1 | X2 | -0,885904039 | 11,97676798 | 1,59434528 | | |
| X2 | X2 | -0,885904039 | 11,97576798 | 1,59534528 | | |

| Modele logistique Y = 1/(1 + exp(-(β₀+β₁.X1+β₂.X2))) : Iteration 17 | | | | | | |
|---|---|---|---|---|---|---|
| Par. β | | Cte | X1 | X2 | ln(V(β)) | |
| | | -8,148111892 | 76,18875899 | -0,622678219 | | |
| Par. (β +hᵢ.eᵢ) du Gradient | | Cte | X1 | X2 | G(β) | norme G(β) |
| Cte | | -8,147111892 | 76,18875899 | -0,622678219 | -3,37388E-07 | 4,4963E-07 |
| X1 | | -8,148111892 | 76,18975899 | -0,622678219 | 2,84316E-07 | |
| X2 | | -8,148111892 | 76,18875899 | -0,621678219 | -8,66089E-08 | |
| Par. (β +hᵢ.eᵢ + hᵢ.eᵢ) du Hessie | | Cte | X1 | X2 | | |
| Cte | Cte | -8,146111892 | 76,18875899 | -0,622678219 | | |
| Cte | X1 | -8,147111892 | 76,18975899 | -0,622678219 | | |
| Cte | X2 | -8,147111892 | 76,18875899 | -0,621678219 | | |
| X1 | X1 | -8,148111892 | 76,19075899 | -0,622678219 | | |
| X1 | X2 | -8,148111892 | 76,18975899 | -0,621678219 | | |
| X2 | X2 | -8,148111892 | 76,18875899 | -0,620678219 | | |

Le modèle trouvé est alors :

$$Y_{NC/C} = \frac{1}{1 + \exp-\left(-8{,}148111892 + 76{,}18875899.X1 - 0{,}622678219.X2\right)},$$

on peut alors prédire pour un couple d'observation (XI, X2) :

- **la réponse** $Y_{NC/C} = 1$ si

$$\frac{1}{1 + \exp-\left(-8{,}148111892 + 76{,}18875899.X1 - 0{,}622678219.X2\right)} > 0{,}5$$

- et la réponse 0 si

$$\frac{1}{1+\exp-\left(-8,148111892+76,18875899.X1-0,622678219.X2\right)} <= 0,5$$

Ainsi, on peut prédire la réponse $Y_{NC/C}$ relatives aux deux dernières observations, comme indiqué ci-dessous :

| X1 | X2 | $Y_{NC/C}$ | X.β | pred $Y_{NC/C}$ |
|---|---|---|---|---|
| 0,345 | -0,273 | 1 | 18,307 | 1 |
| 0,415 | -0,199 | 1 | 23,594 | 1 |
| 0,301 | -0,095 | 1 | 14,844 | 1 |
| 0,303 | -0,042 | 1 | 14,963 | 1 |
| -0,295 | 0,006 | 0 | -30,628 | 0 |
| -0,273 | 0,097 | 0 | -29,008 | 0 |
| -0,186 | 0,072 | 0 | -22,364 | 0 |
| -0,074 | 0,039 | 0 | -13,81 | 0 |
| -0,129 | -0,172 | 0 | -17,869 | 0 |
| -0,206 | 0,109 | 0 | -23,911 | 0 |
| 0,173 | -0,1 | | 5,095 | 1 |
| -0,34 | 0,164 | | -34,154 | 0 |

Comme vu précédemment, en préambule de la première phase, on réalise des essais de soudures.

Ces essais de soudures permettent d'apprendre le modèle. La réalisation de ces essais doit se faire de manière structurée, afin que le modèle appris soit représentatif des paramètres rencontrés lors de la phase série.

Il est possible, par exemple, de s'appuyer sur un plan d'expérience L9=$3^3$. Ce type de plan d'expérience est applicable lorsque trois ou quatre facteurs varient : jeu entre les pièces, puissance, vitesse.

Dans cet exemple, neuf essais sont nécessaires pour effectuer la mise au point de l'opération de soudage et construire un échantillon de données d'apprentissage de cordons soudés (données de profilométrie et données de pyrométrie) en incluant les tests mécaniques réalisés sur les essais, notamment des tests de traction, pour classer ou qualifier la qualité des essais de soudures comme étant « conforme », « non conforme » ou « incertain ».

Chaque essai du plan d'expériences peut donner lieu à k=5 éprouvettes minimum d'apprentissage afin de constituer une base de données à partir de laquelle sera construite les fonctions classement auxquelles on rajoute une éprouvette de validation pour tester les modèles *a posteriori.*

On s'assure que la matrice de covariances X'X des données de profilométrie et de pyrométrie (profils compressés {$X_{1\%}$, $X_{5\%}$, $X_{10\%}$, $X_{15\%}$, ...., $X_{95\%}$, $X_{99\%}$} construits à partir des fonctions de répartition) est bien de plein rang avant d'estimer les paramètres β des modèles logistiques, si ce n'est pas le cas on complète, par exemple, par une deuxième série de 9 essais (2ieme plan L9) les données déjà acquises.

A l'issue du plan d'expériences, on effectue la modélisation par régression logistique qui est validée à partir des éprouvettes (k+1) de chaque essai, le modèle est validé si aucun cordon de soudure réellement « non conforme » n'est qualifié ou prédit comme étant « conforme » par le modèle de régression logistique.

Le plan d'expérience peut être paramétré avec les paramètres suivants :

- le choix (nom) des facteurs,
- leurs modalités (-1, 0, 1) en unité utilisateur (-1 : mini, 0 : (mini+maxi)/2, 1 : maxi)
- le type d'assemblage soudé,
- le cahier des charges de conformité de tenue mécanique de la soudure,
- le nombre d'éprouvettes soudées à chaque essai (k=5 au minimum), plus l'éprouvette de validation.

Une modification d'une valeur d'un critère CdC de conformité de tenue mécanique au cahier des charges induit un nouveau calcul des critères statistiques de qualification de la qualité des cordons de soudures.

Deux réponses au plan d'expériences peuvent être utilisées :

- La réponse moyenne de tenue à la traction $\overline{t_i}$,
- La réponse robustesse de la tenue à la traction estimée par le rapport signal/bruit (SN ratio) Taguchi $SN_i$.

$$s_i = \sqrt{\frac{1}{n-1}\sum_{j=1}^{n}\left(t_{i,j}-\overline{t_i}\right)^2} \quad \overline{t_i} = \frac{1}{n}\sum_{j=1}^{n}t_{i,j} \rightarrow SN_i = 10 \times Log10\left(\left(\frac{\overline{t_i}}{s_i}\right)^2\right)$$

On représente les graphiques d'effets E des facteurs pour les deux réponses en fonction des trois modalités -1, 0, 1 du facteur.

$$E_{\text{modalité k}}^{\text{Facteur i}} = \overline{Reponse\ \substack{\text{Facteur i} \\ \text{modalité k}}} - \overline{\overline{Reponse}}$$

On peut utiliser une interpolation parabolique des effets $E_i$ de chaque facteur (3 modalités par facteur) pour les 3 modalités (-1, 0, 1) sous la forme :

$$E_{Fi} = a.\ (X+b)^2 + c$$

avec

$$\begin{cases} a = \dfrac{3 \times \left(E_1^i - E_{-1}^i\right)}{2} \\ b = \dfrac{\left(E_1^i - E_{-1}^i\right)}{6 \times \left(E_1^i + E_{-1}^i\right)} \\ c = E_0^i - \dfrac{\left(E_1^i - E_{-1}^i\right)^2}{24 \times \left(E_1^i + E_{-1}^i\right)} \end{cases} \qquad E_k^i = \overline{X_k^i} - \overline{\overline{X^i}}$$

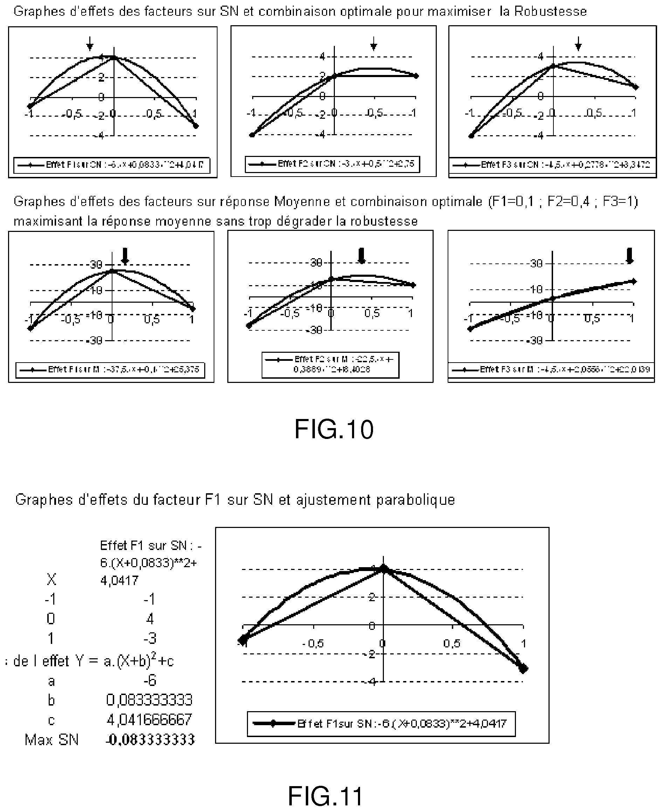

Des exemples d'interpolations paraboliques sont représentés aux figures 10 et 11.

De préférence, on retient, comme solution optimale (c'est-à-dire comme combinaison optimale des modalités des facteurs) par défaut, la solution maximisant la robustesse (SN). On peut aussi choisir une solution maximisant la réponse moyenne tout en minimisant la dégradation de la robustesse. Les prédictions des réponses SN et Moy sont définie à partir des équations suivantes :

$$\begin{cases} Moy = \overline{\overline{X}} + \sum_{i=1}^{4} E_{F_i}\left(x_i\right) \\ SN = \overline{\overline{SN}} + \sum_{i=1}^{4} E_{F_i}\left(x_i\right) \end{cases}$$

Si une deuxième série d'essais doit être réalisée, on analyse l'ensemble des deux séries d'essais du plan d'expérience pour trouver le réglage optimal.

Différents types de plans d'expériences peuvent être utilisés. On peut à cet effet consulter l'ouvrage « Pratique industrielle de la methode Taguchi Les plans d'expériences » de Jacques Alexis, AFNOR.

La base d'apprentissage étant construite, les 21 variables explicatives correspondant aux profils compressés $\{X_{1\%}, X_{5\%}, X_{10\%}, X_{15\%}, ...., X_{95\%}, X_{99\%}\}$ et la qualification de qualité (Conforme / Non conforme / Incertain) étant disponibles pour chaque éprouvette k de chaque essai i ; les 4 sous-modèles logistiques peuvent être construits à partir des données profilométriques et/ou pyrométriques.

**Modèles de dicrimination (NC/C) en X et (I/C) en Y**
**Modèles OK si 0% de cordon Non conforme mal classé**

On valide les modèles à partir des éprouvettes (k+1) de chaque essai, le dispositif de contrôle est déclaré validé si aucun cordon de soudure réellement non conforme n'est prédit par le modèle comme étant « conforme ». Dans le cas contraire, on réitère la procédure sur la deuxième série d'essais et on analyse l'ensemble des 2 x 9 essais du plan d'expérience pour trouver le réglage optimal.

Dans la deuxième phase mentionnée plus haut, le modèle de qualification précédemment définie est utilisé, notamment utilisé en temps réel lors des opérations de soudures, par exemple sur une chaîne de fabrication en série.

Ainsi, lors de la soudure ou après la soudure, sur la base des profils compressés $\{X_{1\%}, X_{5\%}, X_{10\%}, X_{15\%}, ...., X_{95\%}, X_{99\%}\}$ de données de pyrométrie et de profilométrie, on prédit la qualité de la soudure selon l'ordinogramme de la figure 8 :

- la conformité du cordon,
- la non-conformité du cordon, ou
- la « conformité incertaine » du cordon.

De préférence, si trois cordons consécutifs sont prédits de « conformité incertaine » du cordon, on considère que ces trois cordons sont non-conformes.

De préférence, on peut visualiser les profils pyrométrique et profilométrique lissés par ruptures, ainsi que les profils compressés (les quantiles $\{X_{1\%}, X_{5\%}, X_{10\%}, X_{15\%}, ...., X_{95\%}, X_{99\%}\}$ construits à partir des fonctions de répartition) des 50 derniers cordons. On peut aussi sauvegarder, dans une base de données, des profils compressés et horodatés et des prédictions de conformité.

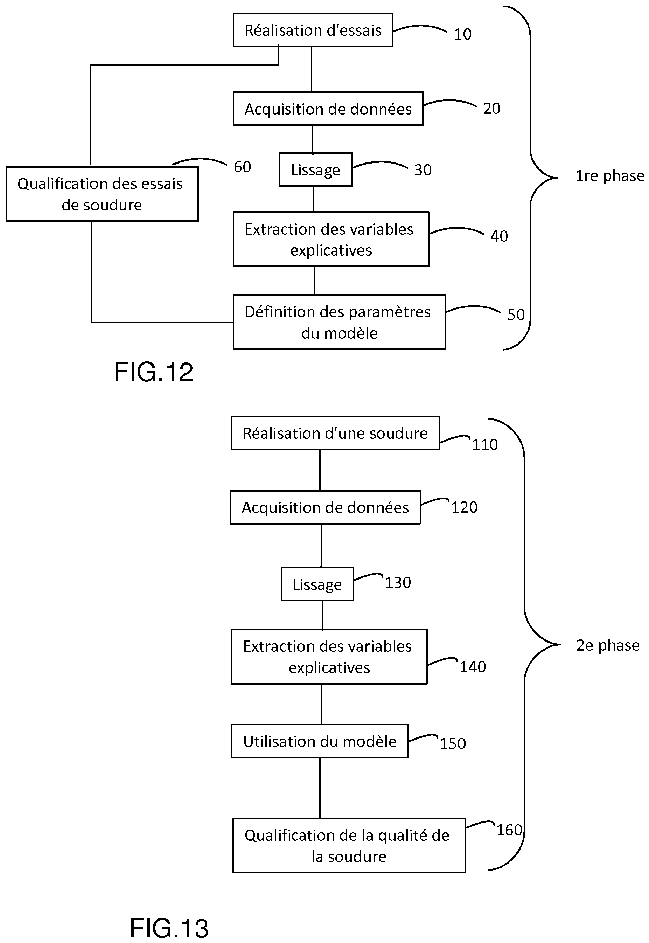

Un mode de réalisation de la première phase d'un procédé de contrôle de la qualité d'une soudure selon invention est décrit ci-après en référence à la figure 12.

Dans une première étape 10, on réalise, lors d'essais de soudage, des éprouvettes.

Dans une deuxième étape 20, on acquiert des données relatives à ces essais de soudage.

Dans une troisième étape 30, on réalise un lissage des données précédemment acquises. Ce lissage est par exemple réalisé par ruptures de moyennes.

Dans une quatrième étape 40, on extrait des variables explicatives à partir des données lissées précédemment.

Dans une étape 60, réalisée par exemple en parallèle des étapes 20 à 40, on qualifie la qualité des essais de soudure en vérifiant si les éprouvettes et donc les soudures, sont conformes ou non conformes à un critère défini dans un cahier des charges. Ce critère peut être un critère de résistance mécanique et la qualification peut passer par un essai de résistance mécanique, par exemple un essai de traction, réalisé avec les éprouvettes.

Dans une étape 50, on utilise les résultats des étapes 40 et 60 pour définir des paramètres du modèle de la qualification de la qualité des soudures. Les paramètres et le modèle sont sauvegardés.

Un mode de réalisation de la deuxième phase d'un procédé de contrôle de la qualité d'une soudure selon invention est décrit ci-après en référence à la figure 13.

Dans une première étape 110, on réalise une soudure.

Dans une deuxième étape 120, on acquiert des données relatives à cette soudure.

Dans une troisième étape 130, on réalise un lissage des données précédemment acquises. Ce lissage est par exemple réalisé par ruptures de moyennes.

Dans une quatrième étape 140, on extrait des variables explicatives à partir des données lissées précédemment.

Dans une étape 150, on utilise les résultats de l'étape 140 et le modèle défini à l'étape 50.

Ainsi, on obtient, à l'étape 160, une qualification de la qualité de la soudure.

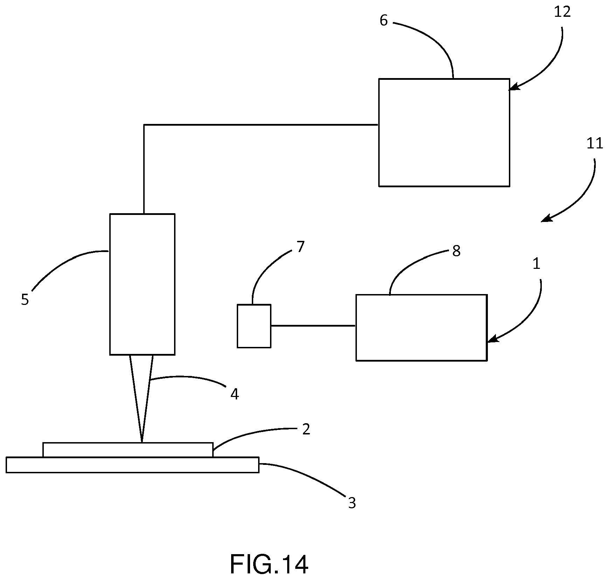

Un mode de réalisation d'un dispositif de contrôle de la qualité d'une soudure selon invention est décrit ci-après en référence à la figure 14.

Le dispositif de contrôle 1 comprend principalement un capteur 7 et une unité logique de traitement 8. Le capteur peut être de toute nature. De préférence, il permet de mesurer des donnés profilométriques et/ou des données thermiques. Il peut notamment comprendre une caméra, comme une caméra laser. Le capteur est de préférence un pyromètre. Les données recueillies par le capteur sont transférées à l'unité logique de traitement 8. Cette unité comprend avantageusement un microcontrôleur et des mémoires. Elle intègre le modèle défini à l'issue de l'étape 50 de la première phase du procédé de contrôle décrit précédemment. De préférence, l'unité de traitement comprend des moyens matériels et/ou logiciels permettant de régir le fonctionnement du dispositif de contrôle de qualité conformément au procédé selon invention, notamment conformément à la deuxième phase du procédé selon invention. Les moyens logiciels peuvent notamment comprendre un programme d'ordinateur.

Par ailleurs, le dispositif de contrôle 1 peut faire partie d'une installation de soudage 11. L'installation comprenant également un dispositif de soudage 12 incluant un moyen de soudage 5, comme un moyen de soudage laser, et unité de commande 6. Cette unité de commande permet notamment de définir des paramètres de soudage, comme une avance, une puissance, une concentration du faisceau laser 4... Le dispositif de soudage permet de souder deux éléments 2 et 3 l'un à l'autre, comme des plaques.

Grâce à l'invention, on peut contrôler, en ligne ou en temps réel, des cordons soudés par laser (ou par une autre technologie, par exemple soudage arc). L'invention s'applique aussi bien au soudage des métaux que des matériaux plastiques ou thermoplastiques. Par ailleurs, le procédé de contrôle qualité selon l'invention peut également être réalisé avec d'autres types et nombres de catégories pour la caractérisation de la qualité de soudure, ainsi que toute autre taille de cordons soudés.

Par ailleurs, le procédé selon l'invention permet :

- de disposer d'un traitement valable pour des applications de soudage de métaux et de plastiques,
- d'étudier uniquement les variations significatives, tout en gardant toutes les informations nécessaires (lissage),
- de disposer d'une très grande robustesse de qualification de la qualité (utilisation de 21 variables explicatives),
- de disposer d'un système « intelligent » : il n'y a pas de seuil qu'un opérateur doit déterminer ou modifier,
- de disposer d'un procédé qui peut être amélioré au cours du temps (enrichissement de la base de données).
- de limiter les espaces de stockage (stockage demandé : uniquement les 21 variables explicatives mentionnées précédemment).
- de permettre une utilisation sur différents sites de production, avec la même base de données (moyennant une procédure appropriée de calibration du capteur).

## Revendications

1. Procédé de contrôle de la qualité d'une soudure, mettant en oeuvre un modèle statistique probabiliste, pour déterminer une qualification de la qualité de la soudure,
   **caractérisé en ce que** le modèle statistique est un modèle du type à régression logistique et **en ce que** la mise en oeuvre du modèle statistique probabiliste comprend :

   une première phase de définition du modèle statistique probabiliste de qualification de la qualité de la soudure en utilisant des données de profilométrie et/ou des données de température, et
   une deuxième phase de qualification de la qualité de la soudure utilisant le modèle statistique probabiliste sous forme de modèle de type à régression logistique de données de profilométrie de la soudure et/ou de données de températures de la soudure.

2. Procédé de contrôle selon la revendication 1, **caractérisé en ce que** chacune des phases comprend une étape de lissage des données réalisé par rupture de moyenne.

3. Procédé de contrôle selon l'une des revendications précédentes, **caractérisé en ce que** la mise en oeuvre du modèle permet de qualifier la qualité de la soudure comme « conforme » ou comme « non-conforme » ou éventuellement comme « incertaine ».

4. Procédé de contrôle selon l'une des revendications précédentes, **caractérisé en ce que** le modèle comprend un premier module mis en oeuvre pour qualifier la qualité de la soudure comme « non conforme » ou « peut-être conforme » et un deuxième module mis en oeuvre pour qualifier la qualité de la soudure comme « conforme » ou « incertaine ».

5. Procédé de contrôle selon l'une des revendications précédentes, **caractérisé en ce que** la première phase comprend au moins l'une des étapes suivantes :

   - une étape de réalisation d'essais de soudures,
   - une étape d'acquisition de données relatives à ces soudures,
   - une étape de qualification de la qualité des essais de soudures,
   - une étape de compression des données lissées et d'extraction de variables explicatives, les variables correspondant par exemple aux quantiles caractéristiques de la fonction de répartition empirique des données lissées,
   - une étape d'utilisation des variables explicatives pour définir les paramètres du modèle.

6. Procédé de contrôle selon l'une des revendications l'une des revendications précédentes, **caractérisé en ce que** la deuxième phase comprend au moins l'une des étapes suivantes :

   - une étape de réalisation d'une soudure,
   - une étape d'acquisition de données relatives à la soudure,
   - une étape de compression des données lissées et d'extraction de variables explicatives, les variables correspondant par exemple aux quantiles caractéristiques de la fonction de répartition empirique des données lissées,
   - une étape d'utilisation du modèle, et
   - une étape de qualification de la qualité de la soudure.

7. Support d'enregistrement de données lisible par un calculateur sur lequel est enregistré un programme informatique comprenant des moyens de codes de programme informatique qui, lorsqu'ils sont exécutés par un calculateur, conduisent celui-ci à mettre en oeuvre les étapes du procédé selon l'une des revendications précédentes.

8. Dispositif (1) de contrôle de la qualité d'une soudure, **caractérisé en ce qu'**il comprend des moyens matériels et logiciels de mise en oeuvre du procédé selon l'une des revendications 1 à 6.

9. Installation de soudage (11), **caractérisée en ce qu'**elle comprend un dispositif de contrôle selon la revendication précédente et un dispositif de soudage (12).

10. Programme informatique comprenant un moyen de code de programme informatique qui, lorsque le programme est exécuté par un calculateur, conduit celui-ci à la réalisation des étapes du procédé selon l'une des revendications 1 à 6.

**Patentansprüche**

1. Verfahren zur Kontrolle der Qualität einer Schweißung unter Umsetzung eines statistischen Wahrscheinlichkeitsmodells, um eine Qualifizierung der Qualität der Schweißung zu bestimmen, **dadurch gekennzeichnet, dass** das statistische Modell ein Modell von der Art der logistischen Regression ist, und dadurch, dass die Umsetzung des statistischen Wahrscheinlichkeitsmodells Folgendes umfasst:

   eine erste Phase der Definition des statistischen Wahrscheinlichkeitsmodells zur Qualifizierung der Qualität der Schweißung unter Verwendung von Profilometriedaten und/oder Temperaturdaten und
   eine zweite Phase der Qualifizierung der Schweißqualität unter Verwendung des Wahrscheinlichkeitsmodells in Form eines Modells von der Art der logistischen Regression von Profilometriedaten der Schweißung und/oder von Temperaturdaten der Schweißung.

2. Kontrollverfahren nach Anspruch 1, **dadurch gekennzeichnet, dass** jede der Phasen einen Schritt der Glättung der Daten durch Mittelbruch umfasst.

3. Kontrollverfahren nach einem der vorangehenden Ansprüche, **dadurch gekennzeichnet, dass** es die Umsetzung des Modells erlaubt, die Schweißqualität als "konform" oder als "nicht konform" oder möglicherweise als "unklar" zu qualifizieren.

4. Kontrollverfahren nach einem der vorangehenden Ansprüche, **dadurch gekennzeichnet, dass** das Modell ein erstes Modul, das angewandt wird, um die Schweißqualität als "nicht konform" oder "möglicherweise konform" zu qualifizieren, und ein zweites Modul, das angewandt wird, um die Schweißqualität als "konform" oder "unklar" zu qualifizieren, umfasst.

5. Kontrollverfahren nach einem der vorangehenden Ansprüche, **dadurch gekennzeichnet, dass** die erste Phase zumindest einen der folgenden Schritte umfasst:

- einen Schritt der Ausführung von Probeschweißungen,
- einen Schritt der Erfassung von Daten in Bezug auf diese Schweißungen,
- einen Schritt der Qualifizierung der Qualität der Probeschweißungen,
- einen Schritt der Komprimierung der geglätteten Daten und der Extraktion von erklärenden Variablen, wobei die Variablen beispielsweise den charakteristischen Quantilen der empirischen Verteilungsfunktion der geglätteten Daten entsprechen,
- einen Schritt der Verwendung der erklärenden Variablen zum Definieren der Parameter des Modells.

6. Kontrollverfahren nach einem der Ansprüche einem der vorangehenden Ansprüche, **dadurch gekennzeichnet, dass** die zweite Phase zumindest einen der folgenden Schritte umfasst:

- einen Schritt der Ausführung einer Schweißung,
- einen Schritt der Erfassung von Daten bezüglich der Schweißung,
- einen Schritt der Komprimierung der geglätteten Daten und der Extraktion von erklärenden Variablen, wobei die Variablen beispielsweise den charakteristischen Quantilen der empirischen Verteilungsfunktion der geglätteten Daten entsprechen,
- einen Schritt der Verwendung des Modells und
- einen Schritt der Qualifizierung der Schweißqualität.

7. Medium zum Aufzeichnen von durch einen Rechner lesbaren Daten, auf dem ein Computerprogramm gespeichert ist, das Computerprogrammcodemittel umfasst, die, wenn sie durch einen Rechner ausgeführt werden, diesen dazu veranlassen, die Schritte des Verfahrens nach einem der vorangehenden Ansprüche auszuführen.

8. Vorrichtung (1) zur Kontrolle der Qualität einer Schweißung, **dadurch gekennzeichnet, dass** sie Hardware- und Softwaremittel zur Umsetzung des Verfahrens nach einem der Ansprüche 1 bis 6 umfasst.

9. Schweißanlage (11), **dadurch gekennzeichnet, dass** sie eine Kontrollvorrichtung nach dem vorangehenden Anspruch und eine Schweißvorrichtung (12) umfasst.

10. Computerprogramm, umfassend ein Computerprogrammcodemittel das, wenn das Programm durch einen Rechner ausgeführt wird, diesen dazu veranlasst, die Schritte des Verfahrens nach einem der Ansprüche 1 bis 6 auszuführen.

**Claims**

1. Method for monitoring the quality of a weld, implementing a probabilistic statistical model, in order to determine a rating of the quality of the weld, **characterized in that** the statistical model is a model of the logistic regression type and **in that** the implementation of the probabilistic statistical model comprises:

a first phase of defining the probabilistic statistical model for rating the quality of the weld by using profilometry data and/or temperature data, and
a second phase of rating the quality of the weld using the probabilistic statistical model in the form of a model of the logistic regression type for profilometry data of the weld and/or temperature data of the weld.

2. Monitoring method according to Claim 1, **characterized in that** each of the phases comprises a step of data smoothing carried out using break in mean.

3. Monitoring method according to either of the preceding claims, **characterized in that** the implementation of the model makes it possible to rate the quality of the weld as "compliant" or as "non-compliant" or possibly as "uncertain".

4. Monitoring method according to one of the preceding claims, **characterized in that** the model comprises a first module implemented to rate the quality of the weld as "non-compliant" or "perhaps compliant" and a second module implemented to rate the quality of the weld as "compliant" or "uncertain".

5. Monitoring method according to one of the preceding claims, **characterized in that** the first phase comprises at least one of the following steps:

   - a step of carrying out weld trials,
   - a step of acquiring data relating to these welds,
   - a step of rating the quality of the weld trials,
   - a step of compressing the smoothed data and of extracting explanatory variables, the variables corresponding for example to the quantiles characteristic of the empirical distribution function of the smoothed data,
   - a step of using the explanatory variables to define the parameters of the model.

6. Monitoring method according to one of the claims one of the preceding claims, **characterized in that** the second phase comprises at least one of the following steps:

   - a step of producing a weld,
   - a step of acquiring data relating to the weld,
   - a step of compressing the smoothed data and of extracting explanatory variables, the variables corresponding for example to the quantiles characteristic of the empirical distribution function of the smoothed data,
   - a step of using the model, and
   - a step of rating the quality of the weld.

7. Data recording medium readable by a calculator on which is recorded a computer program comprising computer program code means which, when executed by a computer, cause the latter to implement the steps of the method according to one of the preceding claims.

8. Device (1) for monitoring the quality of a weld, **characterized in that** it comprises hardware and software means for implementing the method according to one of Claims 1 to 6.

9. Welding installation (11), **characterized in that** it comprises a monitoring device according to the preceding claim and a welding device (12).

10. Computer program comprising a computer program code means which, when the program is executed by a computer, causes the latter to carry out the steps of the method according to one of Claims 1 to 6.

Essai i conforme :
$\forall j\, T_{i,j} > CdC$ & $Pr_{(T_{i,j} < CdC)} << \theta = 10\%$

Essai i incertain ( ~ un peu juste) :
$\forall j\, T_{i,j} > CdC$ & $Pr_{(T_{i,j} < CdC)} > \theta = 10\%$

Essai i non conforme :
$\forall j\, T_{i,j} < CdC$

Distribution des mesures de traction

$N(\mu_i, \sigma_i^2)$  $T_{i,j}$

$Pr(T < CdC) << 10\%$

$N(\mu_i, \sigma_i^2)$

$Pr(T < CdC) > 10\%$

$Pr(T < CdC) > 10\%$

CdC >1,53.σ   CdC   CdC

—— Distribution des mesures de Traction

Critère :   $Pr(X < CdC \mid X = N(\mu, \sigma^2)) < \theta$   → $Pr(Student < (CdC - moy)/std) < \theta$

→ $CdC - T^{-1}(\theta, n-1) \times std << moy$

→ $CdC + 1,533 \times std << moy$  $(T^{-1}(10\%, 4) = -1,533)$

## FIG.1

Détection de ruptures de moyennes représentatives d'anomalie visible ?

## FIG.2

## FIG.3

FIG.4

FIG.5

| | |
|---|---|
| -0,18124 | 63,78% |
| -0,18124 | 64,59% |
| -0,18124 | 65,40% |
| -0,18124 | 66,21% |
| -0,149075 | 67,02% |
| -0,149075 | 67,83% |
| -0,149075 | 68,64% |
| -0,149075 | 69,45% |
| -0,10694 | 70,26% |
| -0,10694 | 71,07% |
| -0,10694 | 71,88% |
| -0,10694 | 72,69% |
| -0,10694 | 73,50% |
| -0,0963 | 74,31% |
| -0,0963 | 75,12% |
| -0,0963 | 75,93% |
| -0,0963 | 76,74% |

FIG.6

| $X_{p\%}$ | p% |
|---|---|
| -0,6845 | 1% |
| -0,5393 | 5% |
| -0,4246 | 10% |
| -0,4088 | 15% |
| -0,3676 | 20% |
| -0,3676 | 25% |
| -0,3055 | 30% |
| -0,2769 | 35% |
| -0,2769 | 40% |
| -0,2769 | 45% |
| -0,2520 | 50% |
| -0,2085 | 55% |
| -0,1836 | 60% |
| -0,1812 | 65% |
| -0,1204 | 70% |
| -0,0963 | 75% |
| -0,0250 | 80% |
| -0,0248 | 85% |

FIG.7

$Y_{NC/C} = X.\beta = 1$

Pyrométrie $\underline{ou}$ Profilométrie

Le cordon est Non Conforme

*Le cordon est peut-être Conforme*

$Y_{I/C} = X.\beta = 1$

Pyrométrie $\underline{ou}$ Profilométrie

Le cordon est Incertain (douteux)

Le cordon est Conforme

Ordinogramme de classification des cordons à partir des 4 modèles logistiques

# FIG.8

# FIG.9

Graphes d'effets des facteurs sur SN et combinaison optimale pour maximiser la Robustesse

Graphes d'effets des facteurs sur réponse Moyenne et combinaison optimale (F1=0,1 ; F2=0,4 ; F3=1) maximisant la réponse moyenne sans trop dégrader la robustesse

## FIG.10

Graphes d'effets du facteur F1 sur SN et ajustement parabolique

| | Effet F1 sur SN : -6.(X+0,0833)**2+ |
|---|---|
| X | 4,0417 |
| -1 | -1 |
| 0 | 4 |
| 1 | -3 |
| ; de l effet Y = a.(X+b)²+c | |
| a | -6 |
| b | 0,083333333 |
| c | 4,041666667 |
| Max SN | -0,083333333 |

## FIG.11

FIG.12

FIG.13

FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1275464 A
- EP 1361015 A
- EP 1767308 A
- EP 1555082 A